# EUROPEAN PATENT APPLICATION

(11) **EP 3 939 738 A1**
(43) Date of publication of application: **19.01.2022**
(21) Application number: 19918914.3
(22) Date of filing: 13.03.2019
(51) Int. Cl.: B23K 26/70

(54) **PROCESSING SYSTEM AND PROCESSING METHOD**

(71) Applicant: NIKON CORPORATION, Minato-ku Tokyo 108-6290 (JP)
(72) Inventor: KAWAI, Hidemi, Tokyo 108-6290 (JP)
(74) Representative: Hoffmann Eitle
(86) International application number: PCT/JP2019/010259
(87) International publication number: WO 2020/183649

(57) **Abstract**

A processing system has: a housing (6) in which an object (W) is housed and that has a part (62) through which light is allowed to pass; an irradiation apparatus (211) that emits a processing beam (PL) for processing the object; a first member (651) which an energy beam (EL) from the irradiation apparatus that propagates toward an outside of the housing through the part enters; and a second member (652) which the energy beam through the first member enters, the first member reduces an intensity of the energy beam that enter the first member, the second member reduces an intensity of the energy beam that enters the second member from the first member.

## Description

### Technical Field

The present invention relates to a technical field of a processing system and a processing method that processes an object by using an energy beam, for example.

### Background Art

Patent Literature 1 discloses a processing apparatus that processes an object by melting powder-like materials with an energy beam and then solidifying the molten materials. A technical problem of this type of processing apparatus is to observe, without being affected by the energy beam, a condition of a processing space in which the object is processed.

### Citation List

### Patent Literature

Patent Literature 1: US 5,038,014B

### Summary of Invention

A first aspect provides a processing system that is provided with: a housing in which an object is housed and that has a formed part through which light is allowed to pass; an irradiation apparatus that emits a processing beam for processing the object; a first member which an energy beam from the irradiation apparatus that propagates toward an outside of the housing through the part enters; and a second member which the energy beam through the first member enters, the first member reducing an intensity of the energy beam that enters the first member, the second member reducing an intensity of the energy beam that enters the second member from the first member.

A second aspect provides a processing system that is provided with: a housing in which an object is housed and that has a formed part through which light is allowed to pass; an irradiation apparatus that emits a processing beam for processing the object; a first member which an energy beam from the irradiation apparatus that propagates toward an outside of the housing through the part enters; and a second member which the energy beam through the first member enters, an intensity of the energy beam that passes through the first member to propagate toward the second member being smaller than an intensity of the energy beam that enters the first member, an intensity of the energy beam that passes through the second member being smaller than an intensity of the energy beam from the first member that enters the second member.

A third aspect provides processing system that is provided with: a housing in which an object is housed and that has a part through which light is allowed to pass; an irradiation apparatus that irradiates the object with a processing beam; a member which an energy beam from the irradiation apparatus that propagates toward an outside of the housing through the part enters and that reduces an intensity of the energy beam that enters the member; and a contact prevention apparatus that prevents the member from contacting with substance existing in an inside of the housing.

A fourth aspect provides a processing method of processing the object by using the processing apparatus provided by any one of the above described first aspect to the third aspect.

A fifth aspect provides a processing method including: irradiating an object that is housed in a housing having a formed part through which light is allowed to pass with a processing beam; reducing an intensity of an energy beam from the irradiation apparatus that propagates toward an outside of the housing through the part by using a first member; and reducing an intensity of the energy beam, the intensity of which is already reduced by the first member, by using the second member.

A sixth aspect provides a processing method including: irradiating an object that is housed in a housing having a formed part through which light is allowed to pass with a processing beam; making an intensity of the energy beam that passes through the first member to propagate toward the second member be lower than an intensity of the energy beam that propagates to an outside of the housing through the part and that enters the first member from the irradiation apparatus; and making an intensity of the energy beam that passes through the second member be lower than an intensity of the energy beam from the first member that enters the second member.

A seventh aspect provides a processing method including: irradiating an object that is housed in a housing having a formed part through which light is allowed to pass with a processing beam; reducing an intensity of the energy beam that propagates toward an outside of the housing through the part by using a member; and preventing the member from contacting with substance existing in an inside of the housing.

An operation and another advantage of the above described aspect will be apparent from an embodiment described below.

### Brief Description of Drawings

[FIG. 1] FIG. 1 is a cross-sectional view that illustrates a structure of a processing system in a first embodiment.
[FIG. 2] FIG. 2 is a cross-sectional view that illustrates a structure of an observation window in the first embodiment.
[FIG. 3] FIG. 3 is a cross-sectional view that illustrates a structure of an aspect of an energy beam that propagates from a chamber space to an external space through the observation window in the first embodiment.
[FIG. 4] Each of FIG. 4A to FIG. 4E is a cross-sectional view that illustrates an aspect in which a certain area on a workpiece is irradiated with light and build materials are supplied thereto.
[FIG. 5] Each of FIG. 5A to FIG. 5C is a cross-sectional view that illustrates a process for forming a three-dimensional structural object.
[FIG. 6] Each of FIG. 6A and FIG. 6B is a cross-sectional view that illustrates a structure of an observation window in a modified example.
[FIG. 7] FIG. 7 is a cross-sectional view that illustrates a structure of an observation window in a modified embodiment.
[FIG. 8] FIG. 8 is a cross-sectional view that illustrates a structure of an observation window in a second embodiment.
[FIG. 9] FIG. 9 is a cross-sectional view that illustrates a structure of an observation window in a third embodiment.
[FIG. 10] FIG. 10 is a cross-sectional view that illustrates a structure of an observation window in a fourth embodiment.
[FIG. 11] FIG. 11 is a cross-sectional view that illustrates a structure of an observation window in a fifth embodiment.
[FIG. 12] FIG. 12 is a cross-sectional view that illustrates a structure of an observation window in a sixth embodiment.
[FIG. 13] FIG. 13 is a cross-sectional view that illustrates a structure of an observation window in a seventh embodiment.
[FIG. 14] FIG. 14 is a cross-sectional view that illustrates a structure near an aperture of a housing of a processing system in an eighth embodiment.
[FIG. 15] FIG. 15 is a cross-sectional view that illustrates an aspect of preventing an adherence of a substance to the observation window by using a gas supply apparatus.
[FIG. 16] FIG. 16 is a cross-sectional view that illustrates a structure of a processing system in a ninth embodiment.
[FIG. 17] FIG. 17 is a cross-sectional view that illustrates a structure of an observation window disposed at a position that is different from an aperture.

### Description of Embodiments

Next, with reference to drawings, embodiments of a processing system and a processing method will be described. In the below described description, the embodiments of a processing system and a processing method will be described by using a processing system SYS that is configured to perform an additive processing on a workpiece W that is one example of an object. Especially, in the below described description, the embodiments of a processing system and a processing method will be described by using a processing system SYS that performs the additive processing based on a LMD (Laser Metal Deposition). The additive processing based on the Laser Metal Deposition is an additive processing for forming a three-dimensional structural object ST that is integrated with the workpiece W or that is separable from the workpiece W by melting build materials M supplied to the workpiece W by a processing beam PL. Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction) in the below described description, for convenience of the description. Moreover, rotational directions (in other words, inclination directions) around the X axis, the Y axis and the Z axis are referred to as a θX direction, a θY direction and a θZ direction, respectively. Here, the Z axis direction may be a gravity direction. Moreover, an XY plane may be a horizontal direction.

### (1) Processing System SYSa in First Embodiment

Firstly, the processing system SYS in a first embodiment (in the below description, the processing system SYS in the first embodiment is referred to as a "processing system SYSa") will be described.

### (1-1) Structure of Processing System SYSa in First Embodiment

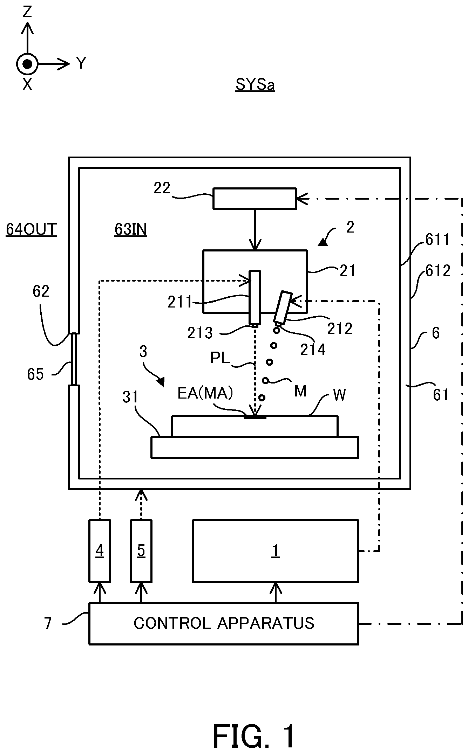

Firstly, with reference to FIG. 1, a structure of the processing system SYSa in the first embodiment will be described. FIG. 1 is a cross-sectional view that illustrates one example of the structure of the processing system SYS in the first embodiment. Note that FIG. 1 does not illustrates cross-sectional surface of a component (specifically, a material supply apparatus 1, a light source 4, a gas supply apparatus 5 and a control apparatus 7) of the processing system SYSa, for a convenience of a description.

The processing system SYSa is configured to form the three-dimensional structural object ST (namely, a three-dimensional object having a size in each of three-dimensional directions, and a solid object). The processing system SYSa is configured to form the three-dimensional structural object ST on the workpiece W that is a base for forming the three-dimensional structural object ST. The workpiece W may be referred to as a base member or a basement. The processing system SYSa is configured to form the three-dimensional structural object ST by performing the additive processing on the workpiece W. When the workpiece W is a below described stage 31, the processing system SYSa is configured to form the three-dimensional structural object ST on the stage 31. When the workpiece W is an existing structural object supported by the stage 31, the processing system SYSa is configured to form the three-dimensional structural object ST on the existing structural object. In this case, the processing system SYSa may form the three-dimensional structural object ST that is integrated with the existing structural object. An operation for forming the three-dimensional structural object ST that is integrated with the existing structural object may be regarded to be equivalent to an operation for adding a new structural object to the existing structural object. Note that the existing structural object may be an item that needs to be repaired having a missing part, for example. The processing system SYSa may form the three-dimensional structural object ST on the item that needs to be repaired to fill in the missing part of the item that needs to be repaired. Alternatively, the processing system SYSa may form the three-dimensional structural object ST that is separable from the existing structural object. Note that FIG. 1 illustrates an example in which the workpiece W is an existing structural object held by the stage 31. The below described description also uses the example in which the workpiece W is an existing structural object held by the stage 31.

As described above, the processing system SYSa is configured to form the three-dimensional structural object ST by the Laser Metal Deposition. Namely, it can be said that the processing system SYSa is a 3D printer that forms an object by using an Additive layer manufacturing technique. Note that the Additive layer manufacturing technique may be referred to as a Rapid Prototyping, a Rapid Manufacturing or an Additive Manufacturing.

In order to form the three-dimensional structural object ST, the processing system SYSa is provided with a material supply apparatus 1, a processing apparatus 2, a stage apparatus 3, a light source 4, a gas supply apparatus 5, an enclosure 6 and a control apparatus 7, as illustrated in FIG. 1. The processing apparatus 2 and the stage apparatus 3 is housed in a chamber space 63IN in the enclosure 6.

The material supply apparatus 1 supplies the build materials M to the processing apparatus 2. The material supply apparatus 1 supplies, to the processing apparatus 2, the build materials M the amount of which is necessary for the processing apparatus 2 to form the three-dimensional structural object ST per unit time by supplying the build materials M at a supply rate based on the necessary amount.

The build material M is a material that is molten by an irradiation of the processing beam PL having a predetermined intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery materials. However, the build materials M may not be the powdery materials, and wired-like build materials or gas-like build materials may be used, for example.

The processing apparatus 2 forms the three-dimensional structural object ST by using the build materials M supplied from the material supply apparatus 1. In order to form the three-dimensional structural object ST by using the build materials M, the processing apparatus 2 is provided with a processing head 21 and a driving system 22. Moreover, the processing head 21 is provided with an irradiation optical system 211 and a material nozzle 212 (namely, a supply system that supplies the build materials M). The processing head 21 and the driving system 22 are housed in the chamber space 63IN.

The irradiation optical system 211 is an optical system (for example, a condensing optical system) for emitting the processing beam PL from an emitting part 213. Specifically, the irradiation optical system 211 is optically connected to the light source 4 that generates the processing beam PL through a non-illustrated light transmitting member such as an optical fiber and light pipe. The irradiation optical system 211 emits the processing beam PL transmitted from the light source 4 through the light transmitting member. The irradiation optical system 211 emits the processing beam PL so that the processing beam PL propagates in the chamber space 63IN. The irradiation optical system 211 emits the processing beam PL in a downward direction (namely, toward a -Z side) from the irradiation optical system 211. The stage 31 is disposed below the irradiation optical system 211. When the workpiece W is placed on the stage 31, the irradiation optical system 211 emits the processing beam PL toward the workpiece W. Specifically, the irradiation optical system 211 is configured to irradiate an irradiation area EA, which is set on the workpiece W as an area that is irradiated with the processing beam PL (typically, in which the light is condensed), with the processing beam PL. Moreover, a state of the irradiation optical system 211 is switchable between a state where the irradiation area EA is irradiated with the processing beam PL and a state where the irradiation area EA is not irradiated with the processing beam PL under the control of the control apparatus 7. Note that a direction of the processing beam PL emitted from the irradiation optical system 211 is not limited to a direct downward direction (namely, coincident with the -Z axis direction), and may be a direction that is inclined with respect to the Z axis by a predetermined angle, for example.

The material nozzle 212 has a supply outlet 214 that supplies the build materials M. The material nozzle 212 supplies (specifically, injects, blows out or sprays) the build materials M from the supply outlet 214. The material nozzle 212 is physically connected to the material supply apparatus 1 that is a supply source of the build materials M through a non-illustrated pipe and the like. The material nozzle 212 supplies the build materials M supplied from the material supply apparatus 1 through the pipe. The material nozzle 212 may pressure-feed the build materials M supplied from the material supply apparatus 1 through the pipe. Namely, the build materials M from the material supply apparatus 1 and gas (for example, inert gas such as Nitrogen or Argon) for feeding are mixed and pressure-fed to the material nozzle 212 through the pipe. Note that although the material nozzle 212 is illustrated to have a tube-like shape in FIG. 1, the shape of the material nozzle 212 is not limited to this shape. The material nozzle 212 supplies the build materials M toward the chamber space 63IN. The material nozzle 212 supplies the build materials M in a downward direction (namely, toward the -Z side) from the material nozzle 212. The stage 31 is disposed below the material nozzle 212. When the workpiece W is loaded on the stage 31, the material nozzle 212 supplies the build materials M toward the workpiece W. Note that although a moving direction of the build materials M supplied from the material nozzle 212 is a direction that is inclined with respect to the Z axis by a predetermined angle (as one example, an acute angle), it may be the -Z axis direction (namely, a direct downward direction).

In the first embodiment, the material nozzle 212 is aligned to the irradiation optical system 211 so as to supply the build materials M to the irradiation area EA that is irradiated with the processing beam PL by the irradiation optical system 211. Namely, the material nozzle 212 is aligned to the irradiation optical system 211 so that the irradiation area EA is coincident with (alternatively, at least partially overlaps with) a supply area MA that is set on the workpiece W as an area to which the material nozzle 212 supplies the build materials M. Note that the material nozzle 212 may be aligned so as to supply the build materials M to a melt pool MP that is formed at the workpiece W by the processing beam PL emitted from the irradiation optical system 211.

The driving system 22 moves the processing head 21. The driving system 22 moves the processing head 21 in the chamber space 63IN, for example. The driving system 22 moves the processing head 21 along at least one of the X axis, the Y axis and the Z axis. When the processing head 21 moves along at least one of the X axis and the Y axis, the irradiation area EA moves on the workpiece W along at least one of the X axis and the Y axis. Furthermore, the driving system 22 may move the processing head 21 along a rotational direction that includes at least one of the θX direction, the θY direction and the θZ direction, in addition to or instead of at least one of the X axis, the Y axis and the Z axis. In other words, the driving system 22 may rotate the processing head 21 around at least one of the X axis, the Y axis and the Z axis. The driving system 22 may change an attitude of the processing head 21 around at least one of the X axis, the Y axis and the Z axis. The head driving system 21 includes an actuator such as a motor, for example. Note that the driving system 22 may moves the irradiation optical system 211 and the material nozzle 212 separately. Specifically, for example, the driving system 22 may be configured to adjust at least one of a position of the emitting part 213, a direction of the emitting part 213, a position of the supply outlet 214 and a direction of the supply outlet 214. In this case, the irradiation area EA that is irradiated with the processing beam PL by the irradiation optical system 211 and the supply area MA to which the material nozzle 212 supplies the build materials M are controllable separately.

The stage apparatus 3 is provided with the stage 31. The stage 31 is housed in the chamber space 63IN. The stage 31 is configured to support the workpiece W. Note that a state where "the stage 31 supports the workpiece W" here may mean a state where the workpiece W is directly or indirectly supported by the stage 31. The stage 31 may be configured to hold the workpiece W. Namely, the stage 31 may support the workpiece W by holding the workpiece W. Alternatively, the stage 31 may not be configured to hold the workpiece W. In this case, the workpiece W may be placed on the stage 31. Namely, the stage 31 may support the workpiece W placed on the stage 31. In this case, the workpiece W may be placed on the stage 31 without a clamp. Therefore, the state where "the stage 31 supports the workpiece W" in the present embodiment may include a state where the stage 31 holds the workpiece W and a state where the workpiece W is placed on the stage 31. Since the stage 31 is housed in the chamber space 63IN, the workpiece W supported by the stage 31 is also housed in the chamber space 63IN. Moreover, the stage 31 may be configured to release the held workpiece W, when the workpiece W is held. The above described irradiation optical system 211 emits the processing beam PL in at least a part of a period when the stage 31 supports the workpiece W. Moreover, the above described material nozzle 212 supplies the build materials M in at least a part of the period when the stage 31 supports the workpiece W. Note that there is a possibility that a part of the build materials M supplied by the material nozzle 212 is scattered or falls to the outside of the workpiece W (for example, around the stage 31) from a surface of the workpiece W. Thus, the processing system SYSa may be provided with a recovery apparatus that recovers the build material M scattered or falling around the stage 31. Note that the stage 31 may be provided with a mechanical chuck, a vacuum chuck and the like in order to hold the workpiece W.

The stage 31 may be movable by a non-illustrated stage driving system. In this case, the stage driving system may move the stage 31 in the chamber space 63IN, for example. The stage driving system may move the stage 31 along at least one of the X axis, the Y axis and the Z axis. When the stage 31 moves along at least one of the X axis and the Y axis, the irradiation area EA moves on the workpiece W along at least one of the X axis and the Y axis. Furthermore, the stage driving system may move the stage 31 along a rotational direction that includes at least one of the θX direction, the θY direction and the θZ direction, in addition to or instead of at least one of the X axis, the Y axis and the Z axis. The stage driving system 31 may include an actuator such as a motor, for example.

The light source 4 emits, as the processing beam PL, at least one of an infrared light and an ultraviolet light, for example. However, light having another wavelength, for example, a light in a visible range may be used as the processing beam PL. The processing beam PL is a laser light. In this case, the light source 4 may include a laser light source such as a semiconductor laser. At least one of a Laser Diode (LD)), a fiber laser, a CO₂ laser, a YAG laser, an Excimer laser and the like is one example of the laser light source. However, the processing beam PL may not be the laser light and the light source 4 may include any light source (for example, at least one of a LED (Light Emitting Diode), a discharge lamp and the like).

The gas supply apparatus 5 is a supply source of the purge gas for purging the chamber 63IN. The purge gas includes inert gas. The Nitrogen gas or Argon gas is one example of the inert gas. The gas supply apparatus 5 supplies the purge gas to the chamber space 63IN. As a result, the chamber space 63IN is a space that is purged by the purge gas. Note that the gas supply apparatus 5 may be a tank that stores the inert gas such as the Nitrogen gas or the Argon gas. When the purge gas is the Nitrogen gas, the gas supply apparatus 5 may be a Nitrogen gas generation apparatus that generates the Nitrogen gas by using air as material.

The enclosure 6 is a housing apparatus that houses at least the processing apparatus 2 in the chamber space 63IN that is an internal space of the enclosure 6. The enclosure 6 is provided with a wall member 61 that forms the chamber space 63IN. The wall member 61 is a member that separates the chamber space 63IN from an external space 64OUT at the outside of the enclosure 6. Note that the external space 64OUT may be a space which an operator of the processing system SYSa is allowed to enter. The wall member 61 faces the chamber space 63IN through its inner wall 611 and faces the external space 64OUT through its outer wall 612. In this case, a space surrounded by the wall member 61 (more specifically, a space surrounded by the inner wall 611 of the wall member 61) is the chamber space 63IN. Note that an openable and closable door may be disposed at the wall member 61. The door may be opened when the workpiece W is to be placed on the stage 31 and the workpiece W and / or a build object (alternatively, the three-dimensional structural object ST) is unloaded from the stage 31 and may be closed when the build is performed. Note that the enclosure 6 may be referred to as a housing. A shape of the housing is not limited to a box-liked shape and may be another shape.

An aperture 62 is formed at the wall member 61. The aperture 62 is a through hole that penetrates the wall member 61 from the inner wall 611 to the outer wall 612. Therefore, the chamber space 63IN is allowed to be connected to the external space 64OUT through the aperture 62. Incidentally, when the openable and closable door is disposed at the wall member 61, the aperture 62 may be formed at the door. Since the aperture 62 is the through hole, the aperture 62 is a part through which light is allowed to pass. Namely, the light is allowed to pass from the internal space 63IN to the external space 64OUT or from the external space 64OUT to the chamber space 63IN through the aperture 62. However, in the first embodiment, an observation window 65 is disposed in the aperture 62. Namely, the observation window 65 is disposed between the chamber space 63IN and the external space 64OUT. Thus, the chamber space 63IN are separated from the external space 64OUT by the observation window 65. As a result, the build materials M supplied from the material nozzle 212 to the chamber space 63IN do not leak to the external space 64OUT from the chamber space 63IN through the aperture 62. Moreover, the purge gas supplied from the gas supply apparatus 5 to the chamber space 63IN do not leak to the external space 64OUT from the chamber space 63IN through the aperture 62. In this case, the observation window 65 serve as an apparatus that prevents a leakage of the build materials M and / or the purge gas. The observation window 65 serve as at least a part of the wall member 61.

Note that the observation window 65 may be tightly adhered to the wall member 61 (especially, a wall part that forms the aperture 62) so that a gap through which the build materials M and / or the purge gas leak is not formed between the observation window 65 and the wall member 61, in order to properly prevent the leakage of the build materials M and / or the purge gas.

At least a part of the observation window 65 is transparent to light in an observation wavelength band that is at least a part of a wavelength band of the visible light. Here, a state where "at least a part of the observation window 65 is transparent to the light in the observation wavelength band" may mean a state where "the light in the observation wavelength band is transmissible (namely, is allowed to pass) through at least a part of the observation window 65". Thus, the light in the observation wavelength band is allowed to propagate (namely, is allowed to pass) from the chamber space 63IN to the external space 64OUT through the observation window 65. In the same manner, the light in the observation wavelength band is allowed to propagate from the external space 64OUT to the chamber space 63IN through the observation window 65. As a result, an observer (for example, the operator of the processing system SYSa) that is in the external space 64OUT is allowed to observe a condition of the chamber space 63IN through at least a part of the observation window 65 at the external space 64OUT. Here, observing the condition of the chamber space 63IN includes observing a condition of an object (for example, at least one of the processing apparatus 2, the stage apparatus 3, the workpiece W and the three-dimensional structural object ST) that is housed in the chamber space 63IN. The observer that is in the external space 64OUT is allowed to observe the condition of the chamber space 63IN through the light in the observation wavelength band that passes through at least a part of the observation window 65 at the external space 64OUT. The observer that is in the external space 64OUT is allowed to observe the condition of the chamber space 63IN through the aperture 62 from the external space 64OUT. The observer that is in the external space 64OUT is allowed to obtain information relating to an inside of the chamber space 63IN (for example, information relating to the condition of the chamber space 63IN) through the light in the observation wavelength band that passes through at least a part of the observation window 65 at the external space 64OUT. Here, obtaining the information relating to the inside of the chamber space 63IN includes obtaining information of the processing apparatus 2, the stage apparatus 3, the workpiece W and the three-dimensional structural object ST that are housed in the chamber space 63IN. When the processing system SYSa is provided with a light reception apparatus or the like that is configured to optically receive the light in the observation wavelength band that passes through at least a part of the observation window 65 (for example, an imaging apparatus that is configured to capture an image of the light in the observation wavelength band), the control apparatus 7 may obtain the information relating to the inside of the chamber space 63IN at the external space 64OUT by analyzing an optical received result by the light reception apparatus. In this case, it can be said that the aperture 62 is formed mainly for the purpose of observing the condition of the chamber space 63IN from the external space 64OUT. The observation window 65 may serve as an observation apparatus for observing the condition of the chamber space 63IN from the external space 64OUT.

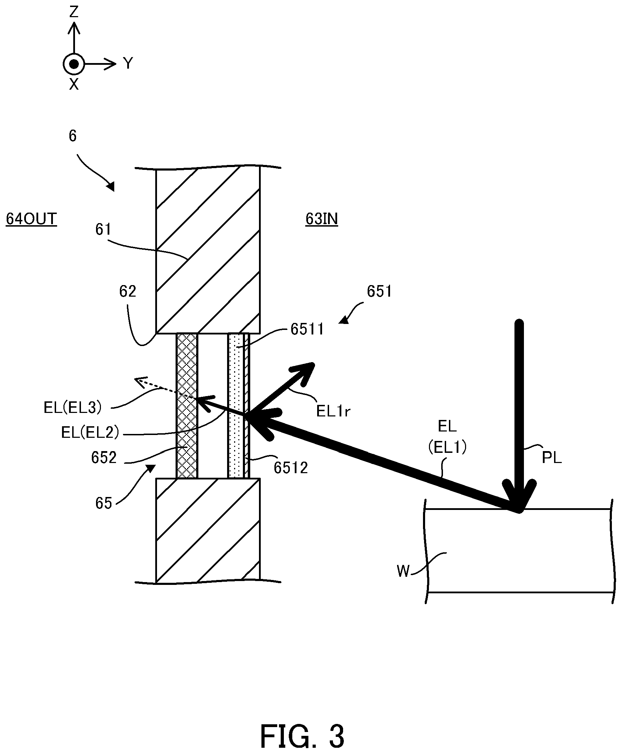

As described above, the irradiation optical system 211 emits the processing beam PL toward the workpiece W. Therefore, there is a relatively low possibility that the processing beam PL emitted from the irradiation optical system 211 directly propagates from the irradiation optical system 211 toward the observation window 65, although it depends on a positional relationship between the workpiece W and the observation window 65. On the other hand, there is a possibility that the processing beam PL with which the workpiece W is irradiated is reflected by the workpiece W. As a result, as illustrated in FIG. 3, there is a possibility that the processing beam PL reflected by the workpiece W (namely, the processing beam PL from the workpiece W) propagates toward the observation window 65. Alternatively. When not only the workpiece W but also any object in the chamber space 63IN is irradiated with the processing beam PL (for example, the processing beam PL from the irradiation optical system 211 and / or from the workpiece W), there is a possibility that the processing beam PL reflected by any object propagates toward the observation window 65. For example, when the stage 31 is irradiated with the processing beam PL, there is a possibility that the processing beam PL reflected by the stage 31 (namely, the processing beam PL from the stage 31) propagates toward the observation window 65. For example, when the three-dimensional structural object ST that is being built is irradiated with the processing beam PL, there is a possibility that the processing beam PL reflected by the three-dimensional structural object ST that is being built (namely, the processing beam PL from the three-dimensional structural object ST that is being built) propagates toward the observation window 65. In the below described description, each of the processing beam PL that directly propagates toward the observation window 65 from the irradiation optical system 211 (namely, a beam component of the processing beam PL that directly propagates toward the observation window 65 from the irradiation optical system 211) and the processing beam PL that is reflected by any object in the chamber space 63IN and then propagates toward the observation window 65 (namely, a beam component of the processing beam PL that is reflected by any object in the chamber space 63IN and then propagates toward the observation window 65) is referred to as an "energy beam EL". If the energy beam EL from the workpiece W (alternatively, the energy beam EL from any object, the same applies to the below described description) passes through the observation window 65 without reducing an intensity thereof, there is a possibility that the energy beam EL that has the intensity higher than an allowable amount is emitted from the chamber space 63IN to the external space 64OUT through the observation window 65. For example, there is a possibility that the energy beam EL the intensity of which is so high that the build materials M are molten is emitted (in other words, is discharged) to the external space 64OUT through the observation window 65.

Thus, in the first embodiment, the observation window 65 attenuates the energy beam EL. Namely, the observation window 65 attenuates the energy beam EL that propagates toward the external space 64OUT through the observation window 65. The observation window 65 attenuates the energy beam EL that propagates toward the external space 64OUT through the aperture 62. In the first embodiment, attenuating the energy beam EL means reducing the intensity of the energy beam EL. In this case, the observation window 65 reduces the intensity of the energy beam EL that enters the observation window 65 from the chamber space 63IN and then passes through the observation window 65 to propagate toward the external space 64OUT. Specifically, the observation window 65 makes the intensity of the energy beam EL that passes through the energy beam EL to propagate toward the external space 64OUT be lower (namely, be reduced) than the intensity of the energy beam EL that enters the observation window 65 from the chamber space 63IN. For example, the observation window 65 reduces the intensity of the energy beam EL from the workpiece W to prevent the energy beam EL that has the intensity higher than the allowable amount from being emitted from the chamber space 63IN to the external space 64OUT. Note that the allowable amount may be set on the basis of an influence of the energy beam EL to the observer that is in the external space 64OUT. The allowable amount may be set so that a safety of the observer that is in the external space 64OUT is secured. For example, the allowable amount may be set so that an energy amount per unit time of the energy beam EL that is emitted toward the external space 64OUT is equal to or smaller than a predetermined amount. For example, the allowable amount may be set so that a safety standard of Class 1 defined by IEC (International Electrotechnical Commission) 60825-1 is satisfied. For example, the allowable amount may be set so that the energy amount per unit time of the energy beam EL that is emitted toward the external space 64OUT is equal to or smaller than a predetermined amount that satisfies the safety standard of Class 1 defined by IEC 60825-1.

Specifically, the observation window 65 may reduce the intensity of the energy beam EL from the workpiece W so that the energy beam EL the intensity of which is lower than the allowable amount is emitted from the chamber space 63IN to the external space 64OUT through the observation window 65. In this case, for example, the observation window 65 may reduce the intensity of the energy beam EL from the workpiece W so that the intensity of the energy beam EL that is emitted to the external space 64OUT through the observation window 65 is lower than the intensity of the energy beam EL that is emitted toward the observation window 65 from the internal chamber 63IN and is lower than the allowable amount. Alternatively, the observation window 65 may reduce the intensity of the energy beam EL from the workpiece W so that the energy beam EL is not emitted from the internal chamber 63IN to the external space 64OUT. Namely, the observation window 65 may serve as a light-shield apparatus that shields the energy beam EL. However, even when the observation window 65 may serve as the light-shield apparatus that shields the energy beam EL, the observation window 65 has a such property that the light in the observation wavelength band is allowed to pass through at least a part of the observation window 65 (namely, at least a part of the observation window 65 is transparent to the light in the observation wavelength band).

When the observation window 65 thorough which the light in the observation wavelength band is allowed to pass reduces the intensity of the energy beam EL, a transmittance of the energy beam EL to the observation window 65 may be typically different from a transmittance of the light in the observation wavelength band to the observation window 65. More specifically, the transmittance of the energy beam EL to the observation window 65 may be lower than the transmittance of the light in the observation wavelength band to the observation window 65. Namely, the transmittance of the light in the observation wavelength band to the observation window 65 may be higher than the transmittance of the energy beam EL to the observation window 65. In this case, the observation window 65 is more likely to have both of a property for reducing the intensity of the energy beam EL and a property of allowing the light in the observation wavelength band to pass therethrough, compared to the case where the transmittance of the energy beam EL to the observation window 65 is equal to the transmittance of the light in the observation wavelength band to the observation window 65.

The wavelength band of the energy beam EL may not overlap with the observation wavelength band. In this case, the observation window 65 is more likely to have both of a property for reducing the intensity of the energy beam EL and a property of allowing the light in the observation wavelength band to pass therethrough, compared to the case where the wavelength band of the energy beam EL overlaps with the observation wavelength band at least partially. However, the wavelength band of the energy beam EL may overlap with the observation wavelength band at least partially.

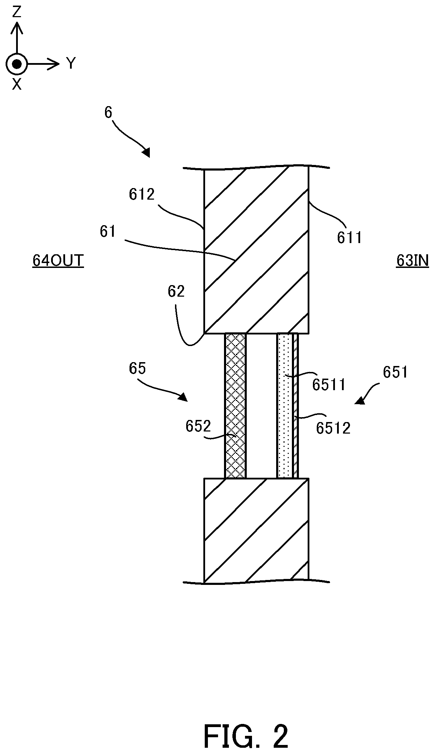

In the first embodiment, the observation window 65 reduces the intensity of the energy beam EL from the workpiece W by reflect and absorb the energy beam EL from the workpiece W. Namely, the observation window 65 reduces the intensity of the energy beam EL from the workpiece W by using both of an optical phenomenon of a reflection of the energy beam EL and an optical phenomenon of an absorption of the energy beam EL. Next, with reference to FIG. 2, the observation window 65 will be further described. FIG. 2 is a cross-sectional view that illustrates one example of a structure of the observation window 65.

As illustrated in FIG. 2, the observation window 65 is provided with a reflection member 651 and an absorption member 652. Since at least a part of the observation window 65 is transparent to the light in the observation wavelength band, at least a part of each of the reflection member 651 and the absorption member 652 is also transparent to the light in the observation wavelength band. Since the light in the observation wavelength band is allowed to pass through at least a part of the observation window 65, the light in the observation wavelength band is also allowed to pass through at least a part of each of the reflection member 651 and the absorption member 652. Since the light in the observation wavelength band is allowed to propagate from the chamber space 63IN to the external space 64OUT and from the external space 64OUT to the chamber space 63IN through the observation window 65, the light in the observation wavelength band is allowed to propagate from the chamber space 63IN to the external space 64OUT and from the external space 64OUT to the chamber space 63IN through at least a part of each of the reflection member 651 and the absorption member 652. Thus, the observer that is in the external space 64OUT is allowed to observe the condition of the chamber space 63IN through at least a part of each of the reflection member 651 and the absorption member 652 at the external space 64OUT. The observer that is in the external space 64OUT is allowed to observe the condition of the chamber space 63IN through the light in the observation wavelength band that passes through at least a part of each of the reflection member 65 1 and the absorption member 652 at the external space 64OUT. The observer that is in the external space 64OUT is allowed to obtain the information relating to the inside of the chamber space 63IN (for example, the information relating to the condition of the chamber space 63IN) through the light in the observation wavelength band that passes through at least a part of each of the reflection member 651 and the absorption member 652 at the external space 64OUT. When the processing system SYSa is provided with the light reception apparatus or the like that is configured to optically receive the light in the observation wavelength band that passes through at least a part of each of the reflection member 651 and the absorption member 652 (for example, the imaging apparatus that is configured to capture the image of the light in the observation wavelength band), the control apparatus 7 may obtain the information relating to the inside of the chamber space 63IN at the external space 64OUT by analyzing the optical received result by the light reception apparatus.

When the transmittance of the light in the observation wavelength band to the observation window 65 may be higher than the transmittance of the energy beam EL to the observation window 65 as described above, a transmittance of the light in the observation wavelength band to the reflection member 651 may be higher than a transmittance of the energy beam EL to the reflection member 651. When the transmittance of the light in the observation wavelength band to the observation window 65 may be higher than the transmittance of the energy beam EL to the observation window 65 as described above, a transmittance of the light in the observation wavelength band to the absorption member 652 may be higher than a transmittance of the energy beam EL to the absorption member 652.

The reflection member 651 is disposed at a position that is closer to the chamber space 63IN than the absorption member 652 is. The reflection member 651 may faces the chamber space 63IN. The absorption member 652 is disposed at a position that is farther from the chamber space 63IN than the reflection member 651 is. The reflection member 651 is disposed between the absorption member 652 and the chamber space 63IN. The reflection member 651 is disposed at a position that is farther from the external space 64OUT than the absorption member 652 is. The absorption member 652 is disposed at a position that is closer to the external space 64OUT than the reflection member 651 is. The absorption member 652 may face the external space 64OUT. The absorption member 652 is disposed between the reflection member 651 and the external space 64OUT. Since the reflection member 651, the absorption member 652, the chamber space 63IN and the external space 64OUT have the above described positional relationship, the energy beam EL that enters the observation window 65 from the chamber space 63IN firstly enters the reflection member 651. Namely, the energy beam that propagates toward the external space 64OUT through the aperture 62 firstly enters the reflection member 651. Then, the energy beam EL passing through the reflection member 651 (namely, the energy beam that is not reflected by the reflection member 651) enters the absorption member 652. Then, the energy beam EL passing through the absorption member 652 is emitted to the external space 64OUT. A surface of the reflection member 651 that faces the chamber space 63IN may be disposed at the external space 64OUT side than the inner wall 611. In this case, it is possible to prevent the reflection member 651 from being destroyed by means of the workpiece W (alternatively, any object in the chamber space 63IN) contacting with (in other words, colliding with) the reflection member 651. A surface of the absorption member 652 that faces the external space 64OUT may be disposed at the chamber space 63IN side than the outer wall 612. In this case, it is possible to prevent the absorption member 652 from being destroyed by means of the workpiece W (alternatively, any object in the chamber space 63IN) contacting with (in other words, colliding with) the absorption member 652.

A gap (namely, a space) may be formed between the reflection member 651 and the absorption member 652. Namely, the reflection member 651 and the absorption member 652 may be disposed at positions that are away from each other. The reflection member 651 and the absorption member 652 may be disposed at positions that are away from each other along a direction directed from the chamber space 63IN to the external space 64OUT. In this case, the energy beam EL that passes through the reflection member 651 enters the absorption member 652 through the gap between the reflection member 651 and the absorption member 652. Alternatively, the gap may not be formed between the reflection member 651 and the absorption member 652. Namely, the reflection member 651 and the absorption member 652 may be disposed to contact with each other. The reflection member 651 and the absorption member 652 may be integrated. In this case, the energy beam EL that passes through the reflection member 651 enters the absorption member 652 without passing through the gap between the reflection member 651 and the absorption member 652.

The reflection member 651 reflects at least a part of the energy beam EL that enters the reflection member 651 from the chamber space 63IN. The reflection member 651 reduces the intensity of the energy beam EL by reflecting at least a part of the energy beam EL that enters the reflection member 651 from the chamber space 63IN. Namely, the reflection member 651 reduces the intensity of the energy beam EL by using the optical phenomenon of the reflection of the energy beam EL. In this case, the reflection member 651 reduces the intensity of the energy beam EL that enters the reflection member 651 from the chamber space 63IN and then passes through the reflection member 651 to propagate to the absorption member 652. Specifically, the reflection member 651 makes the intensity of the energy beam EL that passes through the reflection member 651 to propagate to the absorption member 652 be smaller (namely, be reduced) than the intensity of the energy beam EL that enters the reflection member 651 from the chamber space 63IN.

The reflection member 651 has such a property that a reflectance of the energy beam EL to the reflection member 651 is equal to or higher than a predetermined reflectance. The predetermined transmittance may be any transmittance that is higher than 50% and is equal to or smaller than 100%, for example. In this case, it can be said that the reflection member 651 reflects the energy beam EL so that an intensity of a light component, which is reflected by the reflection member 651, of the energy beam EL entering the reflection member 651 is higher than an intensity of a light component, which passes through the reflection member 651, of the energy beam EL entering the reflection member 651. The predetermined transmittance may be any transmittance that is equal to or higher than 90%, for example. In this case, an efficiency of reducing the intensity of the energy beam EL by the reflection member 651 improves, compared to the case where the predetermined transmittance is any transmittance that is lower than 90%. The predetermined transmittance may be any transmittance that is equal to or higher than 99%, for example. In this case, an efficiency of reducing the intensity of the energy beam EL by the reflection member 651 improves, compared to the case where the predetermined transmittance is any transmittance that is lower than 99%.

The reflection member 651 is provided with a base member 6511 and reflection film 6512. The base member 6511 is a member made from inorganic material, however, may be a member made from another material (for example, organic material). At least one of a glass, a Vycor, a silica glass, a Neoceram and a tempax is one example of the inorganic material. The reflection film 6512 may be a reflection film that has a single reflection layer or may be a reflection film in which a plurality of reflection layers are layered. A layered film including silicon dioxide and tantalum pentoxide is one example of the reflection film in which the plurality of reflection layers are layered. The reflection film 6512 is formed at a surface of the base member 6511 that faces toward the chamber space 63IN side. The reflection film 6512 is formed at a surface of the base member 6511 that faces the chamber space 63IN side. Thus, the energy beam EL that enters the reflection member 651 from the chamber space 63IN firstly enters the reflection film 6512. Then, the energy beam EL passing through the reflection film 6512 (namely, the energy beam that is not reflected by the reflection film 6512) enters the absorption member 652.

The absorption member 652 absorbs at least a part of the energy beam EL that enters the absorption member 652 from the reflection member 651. The absorption member 652 reduces the intensity of the energy beam EL by absorbing at least a part of the energy beam EL that enters the absorption member 652 from the reflection member 651. Namely, the absorption member 652 reduces the intensity of the energy beam EL by using the optical phenomenon of the absorption of the energy beam EL. In this case, the absorption member 652 reduces the intensity of the energy beam EL that enters the absorption member 652 from the reflection member 651 and then passes through the absorption member 6521 to propagate to the external space 64OUT. Specifically, the absorption member 652 makes the intensity of the energy beam EL that passes through the absorption member 652 to propagate to the external space 64OUT be smaller (namely, be reduced) than the intensity of the energy beam EL that enters the absorption member 652 from the reflection member 651.

The absorption member 652 has such a property that an absorption of the energy beam EL by the absorption member 652 is equal to or higher than a predetermined absorption. The predetermined absorption may be any absorption that is from 50% to 100%, for example. The predetermined absorption may be any absorption that is equal to or higher than 90%, for example. The predetermined absorption may be any absorption that is equal to or higher than 99%, for example.

Note that the "absorptance" here is a parameter that represents a ratio of an energy amount of the energy beam EL absorbed by the absorption member 652 to an energy amount of the energy beam EL entering the absorption member 652. This absorptance is determined on the basis of a length of a path of the energy beam EL in the absorption member 652 and an absorption coefficient of the absorption member 652 (for example, a ratio of an energy amount of the absorbed energy beam EL to an energy amount of the entering energy beam EL per unit path length of the energy beam EL). The length of the path of the energy beam EL in the absorption member 652 is equivalent to a size of the absorption member 652 (typically, a thickness of the absorption member 652) along a propagating direction of the energy beam EL in the absorption member 652 (namely, a propagating direction of the energy beam EL at a disposing position of the absorption member 652). The absorption coefficient of the absorption member 652 is a parameter that becomes larger as the absorption member 652 absorbs the energy beam EL more. Typically, the absorption coefficient of the absorption member 652 is a parameter that becomes larger as an absorbed amount of the energy beam EL by the absorption member 652 in a period when the energy beam EL propagates in the absorption member 652 by a unit length becomes larger.

A heat resistance temperature of the base material 6511 is higher than a forming temperature of the reflection film 6512. On the other hand, a heat resistance temperature of the absorption member 652 may not be higher than the forming temperature of the reflection film 6512. Thus, the heat resistance temperature of the absorption member 652 may be lower than a heat resistance temperature of the reflection member 651. To absorption member 652, the energy beam EL that passes through the reflection member 651 (namely, the energy beam EL the intensity of which is reduced by the reflection member 651) enters. Thus, the intensity of the energy beam EL passing through the absorption member 652 is lower than the intensity of the energy beam EL passing through the reflection member 651. Therefore, an amount of heat that is transmitted from the energy beam EL to the absorption member 652 is also smaller than an amount of heat that is transmitted from the energy beam EL to the reflection member 651. Thus, the heat resistance temperature (for example, a melting temperature) of the absorption member 652 may be lower than the heat resistance temperature of the reflection member 651. For example, when the reflection member 651 is a member made from the inorganic material such as the glass as described above, the absorption member 652 may be a member made from organic material a heat resistance temperature of which is generally lower than that of the inorganic material. At least one of PMMA (Polyemethyl methacrylate), acrylic resin, polycarbonate and polyolefin resin is one example of the organic material. However, the heat resistance temperature of the absorption member 652 may be higher than or may be equal to the heat resistance temperature of the reflection member 651. Heat resistance temperatures of the Vycor, the quartz glass, the Neoceram and the tempax, which are described as examples of the inorganic material, are 900 degree C, 900 degree C, 700 degree C and 450 degree C, respectively. Heat resistance temperatures of the PMMA (Polyemethyl methacrylate), the acrylic resin, the polycarbonate and the polyolefin resin, which are described as examples of the organic material, are 100 degree C, 91 to 110 degree C, 130 degree C and 90 to 160 degree C, respectively. A forming temperature of the layered film including the silicon dioxide and tantalum pentoxide, which is the example of the reflection film 6512, is 200 to 400 degree C, for example.

Note that a member made from a material such as aluminum and copper having high heat conductivity may be disposed in the base member 6511 of the reflection member 651 and / or the absorption member 652 in a net-shaped pattern or a grid-shaped pattern. The member made from the material having high heat conductivity may be disposed to thermally be connected to the wall part that forms the aperture 62. In this case, heat generated by the absorption of the energy beam EL is released more easily toward an outside of the base member 6511 of the reflection member 651 and / or the absorption member 652 through the ember made from the material having high heat conductivity.

Next, with reference to FIG. 3, an aspect of the energy beam EL that propagates from the chamber space 63IN to the external space 64OUT through the observation window 35 (namely, an aspect of an attenuation of the energy beam EL by the observation window 65) will be described. FIG. 3 is a cross-sectional view that illustrates the aspect of the energy beam EL that propagates from the chamber space 63IN to the external space 64OUT through the observation window 35 in the first embodiment.

As illustrated in FIG. 3, the energy beam EL from the workpiece W (alternatively, any object in the chamber space 63IN) enters the observation window 65. In the below described description, the energy beam EL that enters the observation window 65 is referred to an "energy beam EL1". In this case, the reflection member 651 (especially, the reflection film 6511) reflects at least a partial light component of the energy beam EL1 (specifically, at least a partial light component determined based on the reflectance of the reflection member 651). In FIG. 3, the energy beam EL1 that is reflected by the reflection member 651 is referred to as an "energy beam EL1r". On the other hand, a residual light component of the energy beam EL1 that is not reflected by the reflection member 651 passes through the reflection member 651. Note that at least a part of the energy beam EL1 may be absorbed or may not be absorbed by the reflection member 651 (especially, the base member 6511) when the energy beam EL1 passes through the reflection member 651. In FIG. 3 the energy beam EL1 that passes through the reflection member 651 is referred to as an "energy beam EL2". As a result, an intensity of the energy beam EL2 is reduced to be a value that is obtained by multiplying an intensity of the energy beam EL1 by a reduction ratio based on the reflectance of the reflection member 651. For example, when the reflectance of the reflection member 651 is 99.9%, the intensity of the energy beam EL2 is reduced to be a value that is obtained by multiplying the intensity of the energy beam EL1 by 0.1% (= 100% - the reflectance of the reflection member 651 = 100% - 99.9%).

Then, the energy beam EL2 that already passes through the reflection member 651 enters the absorption member 652. In this case, the absorption member 652 absorbs at least a partial light component of the energy beam EL2 (specifically, at least a partial light component determined based on the absorptance of the absorption member 652). On the other hand, a residual light component of the energy beam EL2 that is not absorbed by the absorption member 652 passes through the absorption member 652. In FIG. 3 the energy beam EL2 that passes through the absorption member 652 is referred to as an "energy beam EL3". As a result, an intensity of the energy beam EL3 is reduced to be a value that is obtained by multiplying the intensity of the energy beam EL2 by a reduction ratio based on the absorptance of the absorption member 652. For example, when the absorptance of the absorption member 652 is 99.9%, the intensity of the energy beam EL3 is reduced to be a value that is obtained by multiplying the intensity of the energy beam EL2 by 0.1% (= 100% - the absorptance of the absorption member 652 = 100% - 99.9%).

The energy beam EL3 that passes through the absorption member 652 is emitted (namely, discharged) to the external space 64OUT. As a result, the intensity of the energy beam EL3 that is discharged to the external space 64OUT through the observation window 65 is reduced to be a value that is obtained by multiplying the intensity of the energy beam EL1 by the reduction ratio based on the reflectance of the reflection member 651 and the reduction ratio based on the absorptance of the absorption member 652. For example, when the reflectance of the reflection member 651 is 99.9% and the absorptance of the absorption member 652 is 99%, the intensity of the energy beam EL3 is reduced to be a value that is obtained by multiplying the intensity of the energy beam EL1 by 0.01% (= the reduction ratio based on the reflectance of the reflection member 651 × the reduction ratio based on the absorptance of the absorption member 652 = 0.1% × 0.1%).

As described above, the observation window 65 attenuates the energy beam EL3 so that the intensity of the energy beam EL3 is lower than the allowable amount. Thus, each of a characteristic (for example, the reflectance) of the reflection member 651 and a characteristic (for example, the absorptance) of the absorption member 652 is set to a proper value that satisfies such a requirement that the intensity of the energy beam EL3 is lower than the allowable amount.

Again in FIG. 1, the control apparatus 7 controls an operation of the processing system SYSa. The control apparatus 7 may include a CPU (Central Processing Unit) (alternatively, a GPU (Graphic Processing Unit) in addition to or instead of the CPU) and a memory, for example. The control apparatus 7 serves as an apparatus for controlling the operation of the processing system SYSa by means of the CPU executing a computer program. The computer program is a computer program that allows the control apparatus 7 (for example, the CPU) to execute (namely, to perform) a below described operation that should be executed by the control apparatus 7. Namely, the computer program is a computer program that allows the control apparatus 7 to function so as to make the processing system SYSa execute the below described operation. The computer program executed by the CPU may be recorded in the memory (namely, a recording medium) of the control apparatus 7, or may be recorded in any recording medium (for example, a hard disk or a semiconductor memory) that is built in the control apparatus 7 or that is attachable to the control apparatus 7. Alternatively, the CPU may download the computer program that should be executed from an apparatus disposed at the outside of the control apparatus 7 through a network interface.

For example, the control apparatus 7 may control an emitting aspect of the processing beam PL by the irradiation optical system 211. The emitting aspect may include at least one of an intensity of the processing beam PL and an emitting timing of the processing beam PL, for example. When the processing beam PL is a pulse light, the emitting aspect may include a length of an ON time of the pulse light and a ratio (what we call a duty ratio) of the ON time of the pulse light and an OFF time of the pulse light, for example. Moreover, the emission aspect may include the length of the ON time of the pulse light itself and an emission cycle itself, for example. Moreover, the control apparatus 7 may control a moving aspect of the processing head 21 by the driving system 22. The moving aspect may include at least one of a moving distance, a moving speed, a moving direction and a moving timing, for example. Moreover, the control apparatus 7 may controls a supply aspect of the build materials M by the material nozzle 212. The supply aspect may include at least one of the supplied amount (especially, the supplied amount per unit time) and a supply timing.

The control apparatus 7 may not be disposed in the processing system SYS1, and may be disposed at the outside of the processing system SYS1 as a server or the like. In this case, the control apparatus 7 may be connected to the processing system SYS1 through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the processing system SYS1 may be configured to transmit and receive various information through the network. Moreover, the control apparatus 7 may be configured to transmit an information such as a command and a control parameter to the processing system SYS1 through the network. The processing system SYS1 may be provided with a receiving apparatus that receives the information such as the command and the control parameter from the control apparatus 7 through the network.

Note that a part of the control apparatus 7 may be disposed in the processing system SYSa and another part thereof may be disposed at the outside of the processing system SYSa.

Note that the recording medium recording therein the computer program that should be executed by the CPU may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. Moreover, the recording medium may include a device that is configured to record the computer program (for example, a device for an universal use or a device for an exclusive use in which the computer program is embedded to be executable in a form of at least one of a software, a firmware and the like). Moreover, various processes or functions included in the computer program may be realized by a logical process block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a form in which the logical process block and a partial hardware module that realizes an partial element of the hardware are combined.

### (1-2) Processing Operation of Processing System SYSa

Next, a processing operation (namely, an operation for forming the three-dimensional structural object ST) of the processing system SYSa will be described. As described above, the processing system SYSa forms the three-dimensional structural object ST by the Laser Metal Deposition. Thus, the processing system SYSa may form the three-dimensional structural object ST by performing an existing processing operation (a build operation in this case) based on the Laser Metal Deposition. One example of the processing operation of forming the three-dimensional structural object ST by using the Laser Metal Deposition will be briefly described in the below described description.

The processing system SYSa forms the three-dimensional structural object ST on the workpiece W on the basis of a three-dimensional model data or the like (for example, a CAD (Computer Aided Design) data) of the three-dimensional structural object ST that should be formed. A measured data of the solid object measured by a non-illustrated measurement apparatus disposed in the processing system SYSa or a measured data by a three-dimensional shape measurement device disposed separately from the processing system SYSa may be used as the three-dimensional model data. A contact-type of three-dimensional coordinate measurement device having a probe that is movable relative to the workpiece W and is allowed to contact the workpiece W is one example of the three-dimensional shape measurement device. A non-contact-type of three-dimensional measurement device is one example of the three-dimensional shape measurement device. At least one of a Pattern Projection type of three-dimensional measurement device, a Light Section type of three-dimensional measurement device, a Time Of Flight type of three-dimensional measurement device, a Moire Topography type of three-dimensional measurement device, a Holographic Interference type of three-dimensional measurement device, a CT (Computed Tomography) type of three-dimensional measurement device, a MRI (Magnetic Resonance Imaging) type of three-dimensional measurement device and the like is one example of the non-contact-type of three-dimensional measurement device. Note that a STL (Stereo Lithography) format, a VRML (Virtual Reality Modeling language) format, an AMF (Additive manufacturing File format), an IGES (Initial Graphics Exchange Specification) format, a VDA-FS (Association of German Automotive manufactures-Surfaces Interface) format, a HP/GL (Hewlett-Packard Graphics Language) format, a Bitmap format and the like may be used as the three-dimensional model data, for example.

The processing system SYSa sequentially forms a plurality of layered partial structural objects (it is referred to as a "structural layer" in the below described description) SL that are arranged along the Z axis direction in order to form the three-dimensional structural object ST, for example. For example, the processing system SYSa forms, one by one, the plurality of structural layers SL that are obtained by slicing the three-dimensional structural object ST along the Z axis direction. As a result, the three-dimensional structural object ST that is a layered structural body in which the plurality of structural layers SL are layered is formed. Next, a flow of an operation for forming the three-dimensional structural object ST by forming the plurality of structural layers SL one by one in sequence will be described.

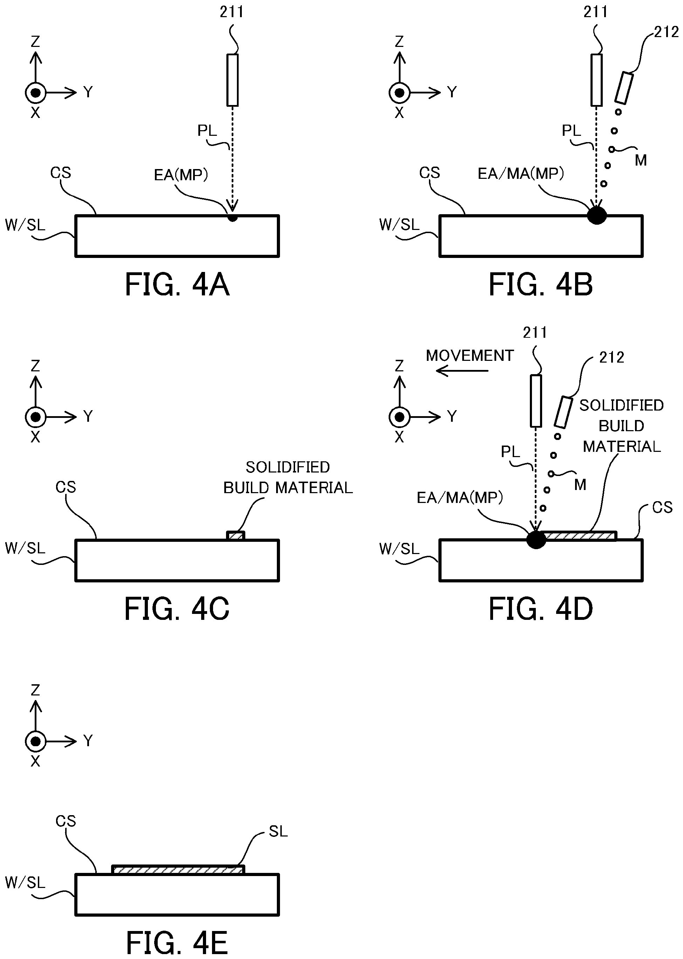

Firstly, with reference to FIG. 4A to FIG. 4E, an operation for forming each structural layer SL will be described. The processing system SYSa sets the irradiation area EA at a desired area on a build surface CS that corresponds to a surface of the workpiece W or a surface of the formed structural layer SL and emits the processing beam PL from the irradiation optical system 211 to the irradiation area EA under the control of the control apparatus 7. Note that an area on the build surface CS that is occupied by the processing beam PL emitted from the irradiation optical system 211 may be referred to as the irradiation area EA. In the first embodiment, a light concentration position (namely, a condensed position) of the processing beam PL is coincident with the build surface CS. As a result, as illustrated in FIG. 4A, the melt pool (namely, a pool of a metal molten by the processing beam PL) MP is formed at the desired area on the build surface CS by the processing beam PL emitted from the irradiation optical system 211. Moreover, the processing system SYSa sets the supply area MA at the desired area on the build surface CS and supplies the build materials M to the supply area MA from the material nozzle 212 under the control of the control apparatus 7. Here, since the irradiation area EA is coincident with the supply area MA as described above, the supply area MA is set at an area at which the melt pool MP is formed. Thus, the processing system SYSa supplies the build materials M to the melt pool MP from the material nozzle 212, as illustrated in FIG. 4B. As a result, the build materials M supplied to the melt pool MP are molten. When the melt pool MP is not irradiated with the processing beam PL due to the movement of the processing head 21, the build materials M molten in the melt pool MP are cooled and solidified (namely, coagulated). As a result, as illustrated in FIG. 4C, the solidified build materials M are deposited on the build surface CS. Namely, a build object is formed by a deposition of the solidified build materials M.

A series of build process including the formation of the melt pool MP by the irradiation of the processing beam PL, the supply of the build materials M to the melt pool MP, the melting of the supplied build materials M and the solidification of the molten build materials M is repeated while relatively moving the processing head 21 relative to the build surface CS along the XY plane, as illustrated in FIG. 4D. Namely, when the processing head 21 relatively moves relative to the build surface CS, the irradiation area EA also relatively moves relative to the build surface CS. Therefore, the series of build process is repeated while relatively moving the irradiation area EA relative to the build surface CS along the XY plane (namely, in a two-dimensional plane). In this case, the irradiation area EA set at the area on which the build object should be formed on the build surface CS is selectively irradiated with the processing beam PL and the irradiation area EA set at an area on which the build object should not be formed on the build surface CS is not selectively irradiated with the processing beam PL (it can be said that the irradiation area EA is not set at the area on which the build object should not be formed). Namely, the processing system SYSa moves the irradiation area EA along a predetermined moving trajectory on the build surface CS and irradiates the build surface CS with the processing beam PL at a timing based on an aspect of a distribution of an area on which the build object should be formed. Note that the aspect of the distribution of an area on which the build object should be formed may be referred to as a distribution pattern and a pattern of the structural layer SL. As a result, the melt pool MP also moves on the build surface CS along a moving trajectory based on the moving trajectory of the irradiation area EA. Specifically, the melt pool MP is formed in series at a part that is irradiated with the processing beam PL in the area along the moving trajectory of the irradiation area EA on the build surface CS. Moreover, since the irradiation area EA is coincident with the supply area MA as described above, the supply area MA also moves on the build surface CS along a moving trajectory based on the moving trajectory of the irradiation area EA. As a result, as illustrated in FIG. 4E, the structural layer SL that is an aggregation of the build object of the solidified build materials M is formed on the build surface CS. Namely, the structural layer SL that is an aggregation of the build object formed in a pattern based on the moving trajectory of the melt pool MP on the build surface CS (namely, the structural layer SL having a shape based on the moving trajectory of the melt pool MP in a planar view) is formed. Incidentally, when the irradiation area EA is set at the area on which the build object should not be formed, the irradiation area EA may be irradiated with the processing beam PL and the supply of the build materials M may be stopped. Moreover, when the irradiation area EA is set at the area on which the build object should not be formed, the build materials M may be supplied to the irradiation area EA and the irradiation area EA may be irradiated with the processing beam PL having an intensity by which the melt pool MP is not formed.

Note that the processing system SYSa moves the irradiation area EA relative to the build surface CS by moving the processing head 21 (namely, moving the processing beam PL) relative to the build surface CS. However, the processing system SYSa may move the irradiation area EA relative to the build surface CS by moving the stage 31 (namely, moving the build surface CS) relative to the build surface CS. in addition to or instead of moving the processing head 21 relative to the build surface CS.

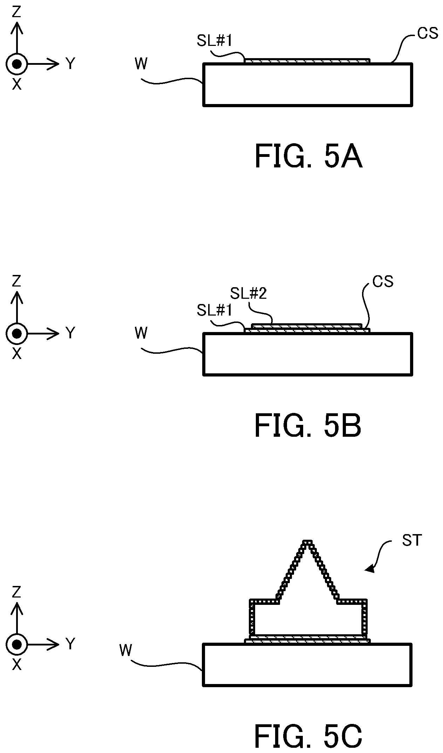

The processing system SYSa repeats the operation for forming the structural layer SL on the basis of the three-dimensional model data under the control of the control apparatus 7. Specifically, a slice data is firstly generated by performing a slicing process on the three-dimensional model data by a layer pitch. Note that a data obtained by partially modifying the slice data on the basis of a characteristic of the processing system SYSa may be used. The processing system SYSa performs an operation for forming the first structural layer SL#1 on the build surface CS that corresponds to the surface of the workpiece W on the basis of the three-dimensional model data corresponding to a structural layer SL#1, namely, the slice data corresponding to the structural layer SL#1. As a result, as illustrated in FIG. 5A, the structural layer SL#1 is formed on the build surface CS. Then, the processing system SYSa sets the surface (namely, an upper surface) of the structural layer SL#1 to a new build surface CS and forms a second structural layer SL#2 on the new build surface CS. In order to form the structural layer SL#2, firstly, the control apparatus 7 controls the driving system 22 so that the processing head 21 moves along the Z axis direction. Specifically, the control apparatus 7 controls the driving system 22 to move the processing head 21 toward the +Z axis side so that the irradiation area EA and the supply area MA are set on the surface of the structural layer SL#1 (namely, the new build surface CS). By this, the light concentration position of the processing beam PL is coincident with the new build surface CS. Then, the processing system SYSa forms the structural layer SL#2 on the structural layer SL#1 on the basis of the slice data corresponding to the structural layer SL#2 by the operation that is the same as the operation for forming the structural layer SL#1 under the control of the control apparatus 7. As a result, as illustrated in FIG. 5B, the structural layer SL#2 is formed. Then, the same operation is repeated until all structural layers SL constituting the three-dimensional structural object ST that should be formed on the workpiece W are formed. As a result, the three-dimensional structural object ST is formed by a layered structural object in which the plurality of structural layers SL are layered, as illustrated in FIG. 5C.

### (1-3) Technical Effect of Processing System SYSa

As described above, the processing system SYSa in the first embodiment can properly perform the additive processing on the workpiece W.

The processing system SYSa is provided with the observation window 65 that is disposed in the aperture 62 of the enclosure 6. Since at least a part of the observation window 65 is transparent to the light in the observation wavelength band, the observer that is in the external space 64OUT is allowed to properly observe the condition of the chamber space 63IN through at least a part of the observation window 65. On the other hand, the observation window 65 reduces the intensity of the energy beam EL so that the intensity of the energy beam EL that is emitted to the external space 64OUT through the observation window 65 is lower than the allowable amount. Thus, the observer that is in the external space 64OUT is allowed to safely observe the condition of the chamber space 63IN through at least a part of the observation window 65.

Especially in the first embodiment, the observation window 65 is provided with both of the reflection member 651 and the absorption member 652. In this case, an expense cost of the absorption member 652 is generally smaller than an expense cost of the reflection member 651, and thus, an expense cost of the observation window 65 is reducible, compared to an observation window in a first comparison example that is provided with a plurality of reflection members 651.

Furthermore, in the first embodiment, the energy beam EL1 from the workpiece W enters the absorption member 652 through the reflection member 651. Namely, the energy beam EL1, the intensity of which is reduced by the reflection member 651, enters the absorption member 652. In other word, the energy beam EL the intensity of which is so high that the build materials M are molten does not enter the absorption member 652. Thus, an amount of heat generation of the absorption member 652 due to the absorption of the energy beam EL is smaller, compared to an observation window in a second comparison example in which the energy beam EL1 from the workpiece W enters the absorption member 652 without through the reflection member 651. This is because the intensity of the energy beam EL2 that enters the absorption member 652 of the observation window 65 in the first embodiment is lower than the intensity of the energy beam EL1 that enters the absorption member 652 of the observation window in the second comparison example. As a result, there is a smaller (or no) possibility that the absorption member 652 is molten (namely, destroyed) due to the heat generation. Namely, the observation window 65 is allowed to reduce (alternatively, eliminate) the possibility of the melting of the absorption member 652 and reduce the intensity of the energy beam EL.

### (1-4) Modified Example of Processing System SYSa

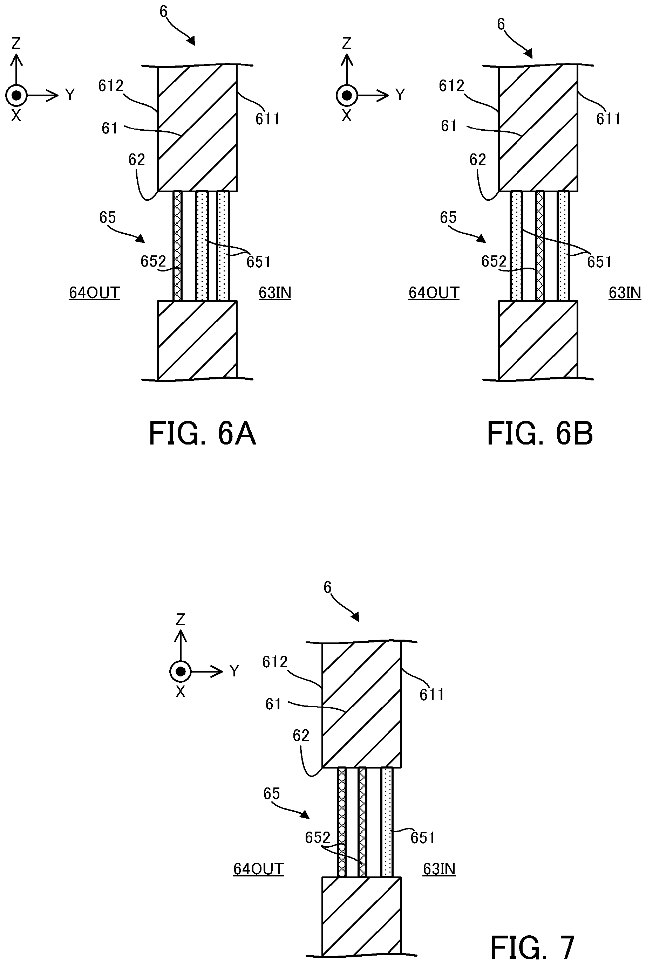

In the above described description, the observation window 65 is provided with the single reflection member 651. However, as illustrated in FIG. 6A and FIG. 6B each of which is a cross-sectional view that illustrates the observation window 65 in a modified example, the observation window 65 may be provided with a plurality of reflection members 651. In this case, as illustrated in FIG. 6A, the absorption member 652 may be disposed at a position that is farther from the chamber space 63IN than all of the reflection members 651 are. Namely, all of the reflection members 651 may be disposed between the absorption member 652 and the chamber space 63IN. alternatively, as illustrated in FIG. 6B, the absorption member 652 may be disposed at a position that is farther from the chamber space 63IN than a part of the reflection members 651 are and may be disposed at a position that is closer to the chamber space 63IN than another part of the reflection members 651 are. Namely, the absorption member 652 may be disposed between at least two of the reflection members 651.

In the above described description, the observation window 65 is provided with the single absorption member 652. However, as illustrated in FIG. 7 that is a cross-sectional view that illustrates the observation window 65 in the modified example, the observation window 65 may be provided with a plurality of absorption members 652. In this case, as illustrated in FIG. 7, the plurality of absorption members 652 are disposed at positions that are farther from the chamber space 63IN than the reflection member 651 is. However, at least one of plurality of the absorption members 652 may be disposed at a position that is closer to the chamber space 63IN than the reflection member 651.

In the above described description, the reflection member 651 reduces the intensity of the energy beam EL by reflecting at least a part of the energy beam EL. However, the reflection member 651 may reduce the intensity of the energy beam EL by absorbing at least a part of the energy beam EL in addition to reflecting at least a part of the energy beam EL. In the above described description, the absorption member 652 reduces the intensity of the energy beam EL by absorbing at least a part of the energy beam EL. However, the absorption member 652 may reduce the intensity of the energy beam EL by reflecting at least a part of the energy beam EL in addition to absorbing at least a part of the energy beam EL. The observation window 65 may be provided with a member that reduces the intensity of the energy beam EL by reflecting and absorbing at least a part of the energy beam EL, in addition to or instead of at least one of the reflection member 651 and the absorption member 652.

### (2) Processing System SYSb in second Embodiment

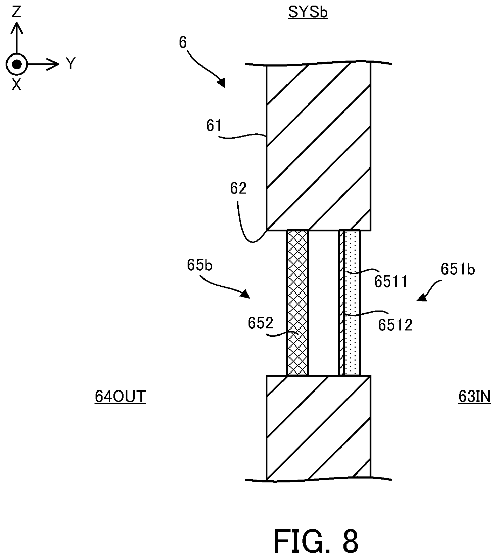

Next, the processing system SYS in a second embodiment (in the below description, the processing system SYS in the second embodiment is referred to as a "processing system SYSb") will be described. The processing system SYSb in the second embodiment is different from the above described processing system SYSa in the first embodiment in that it is provided with an observation window 65b instead of the observation window 65. Another feature of the processing system SYSb may be same as another feature of the processing system SYSa. Therefore, in the below described description, with reference to FIG. 8, the observation window 65b in the second embodiment will be described. FIG. 8 is a cross-sectional view that illustrates one example of a structure of the observation window 65b in the second embodiment. Note that a detailed description of the component that is already described is omitted by assigning the same reference number to it.

As illustrated in FIG. 8, the observation window 65b in the second embodiment is different from the above described observation window 65 in the first embodiment in that it is provided with a reflection member 651b instead of the reflection member 651. Another feature of the observation window 65b may be same as another feature of the observation window 65. The reflection member 651b is different from the reflection member 651 in which the reflection film 6512 is formed at the surface of the base member 6511 that faces toward the chamber space 63IN side in that the reflection film 6512 is formed at a surface of the base member 6511 that faces toward the external space 64OUT side (namely, a side opposite to the chamber space 63IN). Another feature of the reflection member 651b may be same as another feature of the reflection member 651.

According to the above described processing system SYSb in the second embodiment, an effect that is same as the effect achievable by the processing system SYSa in the first embodiment is achievable.

### (3) Processing System SYSc in third Embodiment

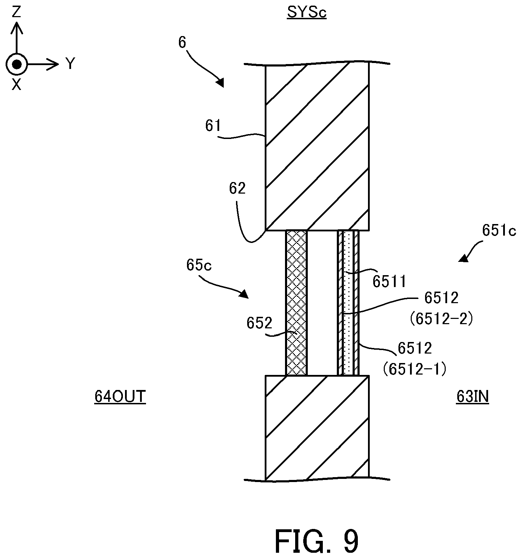

Next, the processing system SYS in a third embodiment (in the below description, the processing system SYS in the third embodiment is referred to as a "processing system SYSc") will be described. The processing system SYSc in the third embodiment is different from the above described processing system SYSa in the first embodiment in that it is provided with an observation window 65c instead of the observation window 65. Another feature of the processing system SYSc may be same as another feature of the processing system SYSa. Therefore, in the below described description, with reference to FIG. 9, the observation window 65c in the third embodiment will be described. FIG. 9 is a cross-sectional view that illustrates one example of a structure of the observation window 65c in the third embodiment.

As illustrated in FIG. 9, the observation window 65c in the third embodiment is different from the above described observation window 65 in the first embodiment in that it is provided with a reflection member 651c instead of the reflection member 651. Another feature of the observation window 65c may be same as another feature of the observation window 65. The reflection member 651c is different from the reflection member 651 that may not be provided with a plurality of reflection films 6512 in that it is provided with a plurality of reflection films 6512 (two reflection films 6512-1 and 6512-2 in an example illustrated in FIG. 9). The first reflection film 6512-1 of the plurality of reflection films 6512 is formed at the surface of the base member 6511 that faces toward the chamber space 63IN side. The second reflection film 6512-2 of the plurality of reflection films 6512 is formed at the surface of the base member 6511 that faces toward the external space 64OUT side (namely, the side opposite to the chamber space 63IN). Incidentally, when the reflection member 651c is provided with three or more reflection films 6512, a third reflection film 6512 of the plurality of reflection films 6512 may be formed in the base member 6511 (namely, between the first reflection film 6512 and the second reflection film 6512). Another feature of the reflection member 651c may be same as another feature of the reflection member 651.

According to the above described processing system SYSb in the third embodiment, an effect that is same as the effect achievable by the processing system SYSa in the first embodiment is achievable. Furthermore, in the third embodiment, since the reflection member 6512c is provided with the plurality of reflection films 6512, there is a possibility that the reflectance of the reflection member 651c is higher than the reflectance of the reflection member 651 that may not be provided with the plurality of reflection films 6512. Thus, there is a possibility that the reflection member 651c reflects the energy beam EL more efficiently than the reflection member 651. As a result, there is a possibility that the reflection member 651c reduces the intensity of the energy beam EL more efficiently than the reflection member 651. Namely, there is a possibility that the efficiency of reducing the intensity of the energy beam EL by the observation window 65c is hither than the efficiency of reducing the intensity of the energy beam EL by the above described observation window 65. Thus, there is a possibility that the observation window 65c attenuates the energy beam EL more efficiently than the observation window 65 so that the intensity of the energy beam EL that is emitted to the external space 64OUT is lower than the allowable amount.

### (4) Processing System SYSd in fourth Embodiment

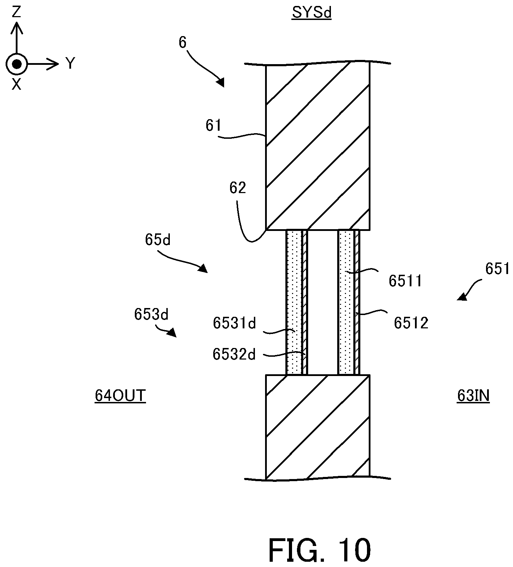

Next, the processing system SYS in a fourth embodiment (in the below description, the processing system SYS in the fourth embodiment is referred to as a "processing system SYSd") will be described. The processing system SYSd in the fourth embodiment is different from the above described processing system SYSa in the first embodiment in that it is provided with an observation window 65d instead of the observation window 65. Another feature of the processing system SYSd may be same as another feature of the processing system SYSa. Therefore, in the below described description, with reference to FIG.10, the observation window 65d in the fourth embodiment will be described. FIG. 10 is a cross-sectional view that illustrates one example of a structure of the observation window 65d in the fourth embodiment.

As illustrated in FIG. 10, the observation window 65d in the fourth embodiment is different from the above described observation window 65 in the first embodiment in that it is provided with a reflection member 653d instead of the absorption member 652. Namely, the observation window 65d is different from the observation window 65 that is provided with the reflection member 651 and the absorption member 652 in that it is provided with the reflection member 651 and the reflection member 653d. Thus, the observation window 65d reduces the intensity of the energy beam EL from the workpiece W by using the optical phenomenon of the reflection of the energy beam EL. Another feature of the observation window 65d may be same as another feature of the observation window 65.

The reflection member 653d may have a structure and a characteristic that are same as those of the reflection member 651. Therefore, the reflection member 653d is provided with a base member 6531d having a structure and a characteristic that are same as those of the base member 6511 and a reflection film 6532d having a structure and a characteristic that are same as those of the reflection film 6512. Thus, the reflection member 653d reduces the intensity of the energy beam EL by reflecting the energy beam, as with the reflection member 651. Furthermore, the light in the observation wavelength band is allowed to propagate from the chamber space 63IN to the external space 64OUT and from the external space 64OUT to the chamber space 63IN through at least a part of each of the reflection member 651 and the reflection member 653d.

However, a disposing position of the reflection member 653d is different from that of the reflection member 651. Specifically, the reflection member 653d is disposed so that a positional relationship between the reflection member 653d and the reflection member 651 is same as a positional relationship between the above described absorption member 652 and the reflection member 651. Therefore, in the fourth embodiment, the energy beam EL that already passes through the reflection member 651 (specifically, the energy beam EL2 illustrated in FIG. 3) enters the reflection member 653d. In this case, the reflection member 653d reflects at least a partial light component of the energy beam EL2 (specifically, at least a partial light component determined based on the reflectance of the reflection member 653d). On the other hand, a residual light component of the energy beam EL2 that is not reflected by the reflection member 653d passes through the reflection member 653d. Note that at least a part of the energy beam EL2 may be absorbed or may not be absorbed by the reflection member 653d (especially, the base member 6531d) when the energy beam EL2 passes through the reflection member 653d. The intensity of the energy beam EL2 that passes through the reflection member 653d to be emitted to the external space 64OUT is reduced to be a value that is obtained by multiplying the intensity of the energy beam EL2 that enters the reflection member 653d by a reduction ratio based on the reflectance of the reflection member 653d. As a result, the intensity of the energy beam EL that is discharged to the external space 64OUT through the observation window 65d is reduced to be a value that is obtained by multiplying the intensity of the energy beam EL that enters the observation window 65d by the reduction ratio based on the reflectance of the reflection member 651 and the reduction ratio based on the reflectance of the reflection member 653d. Thus, a characteristic (for example, the reflectance) of each of the reflection member 651 and the reflection member 653d is set to a proper value that satisfies such a requirement that the intensity of the energy beam EL that is discharged to the external space 64OUT is lower than the allowable amount.

The above described processing system SYSd in the fourth embodiment can properly perform the additive processing on the workpiece W. Furthermore, the observer that is in the external space 64OUT is allowed to properly and safely observe the condition of the chamber space 63IN through at least a part of the observation window 65d. This is because at least a part of the observation window 65d is transparent to the light in the observation wavelength band and the observation window 65d attenuates the energy beam EL.

Furthermore, in the fourth embodiment, the observation window 65 may not be provided with the absorption member 652 that may generate the heat due to the absorption of the energy beam EL and that may be molten due to the generated heat. Thus, no measurement needs to be taken to prepare for the melting of the absorption member 652 on the observation window 65d. As a result, the intensity of the energy beam EL is reducible by the observation window 65d without taking the measurement to prepare for the melting of the absorption member 652. However, since the expense cost of each of the reflection members 651 and 653d is higher than the expense cost of the absorption member 652 as described above, there is a possibility that an expense cost of the observation window 65d in the fourth embodiment is higher than the expense cost of the observation window 65 in the first embodiment.

Note that the reflection member 651 may be a member in which the reflection film 6512 is formed at the surface of the base member 6511 that faces toward the external space 64OUT side in the fourth embodiment, as with the second embodiment. The reflection member 653d may be a member in which the reflection film 6532d is formed at the surface of the base member 6531d that faces toward the external space 64OUT side. The reflection member 651 may be a member that is provided with the plurality of reflection films 6512 in the fourth embodiment, as with the third embodiment. The reflection member 653d may be a member that is provided with the plurality of reflection films 6532d.

The observation window 65d may be provided with another reflection member having a structure and a characteristic that are same as those of at least one of the reflection members 651 and 653d, in addition to the reflection members 651 and 653d. Namely, the observation window 65d may be provided with three or more reflection members.

### (5) Processing System SYSe in fifth Embodiment

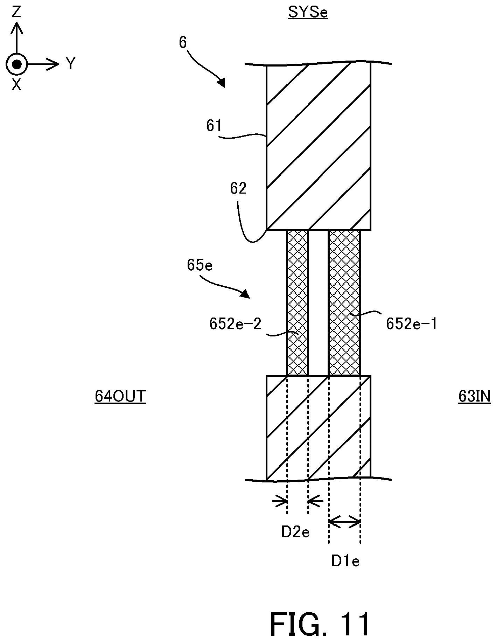

Next, the processing system SYS in a fifth embodiment (in the below description, the processing system SYS in the fifth embodiment is referred to as a "processing system SYSe") will be described. The processing system SYSe in the fifth embodiment is different from the above described processing system SYSa in the first embodiment in that it is provided with an observation window 65e instead of the observation window 65. Another feature of the processing system SYSe may be same as another feature of the processing system SYSa. Therefore, in the below described description, with reference to FIG.11, the observation window 65e in the fifth embodiment will be described. FIG. 11 is a cross-sectional view that illustrates one example of a structure of the observation window 65e in the fifth embodiment.

As illustrated in FIG. 11, the observation window 65e in the fifth embodiment is different from the above described observation window 65 in the first embodiment in that it is provided with two absorption members 652e-1 and 652e-2 instead of the reflection member 651 and the absorption member 652. Thus, the observation window 65e reduces the intensity of the energy beam EL from the workpiece W by using the optical phenomenon of the absorption of the energy beam EL. Another feature of the observation window 65e may be same as another feature of the observation window 65.

Each of the absorption members 652e-1 and 652e-2 may have a structure and a characteristic that are same as those of the absorption member 652. Therefore, each of the absorption members 652e-1 and 652e-2 reduces the intensity of the energy beam EL by absorbing the energy beam, as with the absorption member 652. Furthermore, the light in the observation wavelength band is allowed to propagate from the chamber space 63IN to the external space 64OUT and from the external space 64OUT to the chamber space 63IN through at least a part of each of the absorption members 652e-1 and 652e-2.

Especially in the fifth embodiment, an absorption coefficient of the absorption member 652e-1 to the energy beam EL is different from an absorption coefficient of the absorption member 652e-2 to the energy beam EL. Specifically, the absorption coefficient of the absorption member 652e-1, which is relatively closer to the chamber space 63IN, to the energy beam EL is smaller than the absorption coefficient of the absorption member 652e-2, which is relatively farther from the chamber space 63IN, to the energy beam EL. Namely, the absorption coefficient of each of the absorption members 652e-1 and 652e-2 is set so that the absorption member 652e-1 that is relatively closer to the chamber space 63IN is less likely to absorb the energy beam EL than the absorption coefficient of the absorption member 652e-2 that is relatively farther from the chamber space 63IN.

In the fifth embodiment, since the absorption coefficient of the absorption member 652e-1 is smaller than the absorption coefficient of the absorption member 652e-2, the amount of the heat generation per unit length due to the absorption of the energy beam EL in the absorption member 652e-1 is equal to or smaller than the amount of the heat generation per unit length due to the absorption of the energy beam EL in the absorption member 652e-2. Specifically, the smaller the absorption coefficient of the absorption member 652e-1 is, the harder it is for the absorption member 652e-1 to absorb the energy beam EL, and thus, the amount of the heat generation per unit length due to the absorption of the energy beam EL in the absorption member 652e-1 becomes smaller. Thus, even when the energy beam EL the intensity of which is so high that the build materials M are molten enters the absorption member 652e-1, there is a low possibility that the absorption member 652e-1 is molten due to the heat generation of the absorption member 652e-1. On the other hand, the energy beam EL that is already attenuated by the absorption member 652e-1 enters the absorption member 652e-2. Thus, even when the absorption coefficient of the absorption member 652e-2 is larger than the absorption coefficient of the absorption member 652e-1, there is a relatively low possibility that the amount of the heat generation of the absorption member 652e-2 due to the absorption of the energy beam EL is too much, because the intensity of the energy beam EL that enters the absorption member 652e-2 is lower than the intensity of the energy beam EL that enters the absorption member 652e-1. Thus, there is a relatively low possibility that the absorption member 652e-2 is molten due to the heat generation of the absorption member 652e-2. Therefore, when the absorption coefficient of the absorption member 652e-1 is smaller than the absorption coefficient of the absorption member 652e-2, the observation window 65e is allowed to reduce (alternatively, eliminate) the possibility of the melting of each of the absorption members 652e-1 and 652e-2 and reduce the intensity of the energy beam EL. Namely, the observation window 65e is allowed to reduce (alternatively, eliminate) the possibility of the melting of each of the absorption members 652e-1 and 652e-2 reduce the possibility and reduce the intensity of the energy beam EL, even when the observation window 65e is not provided with the reflection member 651 the expense const is relatively high.

On the other hand, the smaller the absorption coefficient of the absorption member 652e-1 is, the lower the absorption of the energy beam EL by the absorption member 652e-1 is. As a result, there is a relatively high possibility that the absorption member 652e-1 does not have such a characteristic that the absorption of the energy beam EL is equal to or higher than the predetermined absorptance. On the other hand, the larger the absorption coefficient of the absorption member 652e-2 is, the higher the absorption of the energy beam EL by the absorption member 652e-2 is. there is a relatively low possibility that the absorption member 652e-2 does not have such a characteristic that the absorption of the energy beam EL is equal to or higher than the predetermined absorptance. Thus, in the fifth embodiment, focusing on such a fact that the absorption of the energy beam EL by the absorption member 652 is determined on the basis of the length of the path of the energy beam EL in the absorption member 652 and the absorption coefficient of the absorption member 652, the length of the path of the energy beam EL in the absorption member 652e-1 the absorption coefficient of which is relatively small is set to a length that is different from the length of the path of the energy beam EL in the absorption member 652e-2 the absorption coefficient of which is relatively large. Specifically, the length of the path of the energy beam EL in the absorption member 652e-1 the absorption coefficient of which is relatively small is set to be longer than the length of the path of the energy beam EL in the absorption member 652e-2 the absorption coefficient of which is relatively large. The longer the length of the path of the energy beam EL in the absorption member 652e-1 is, the higher the absorption of the energy beam EL by the absorption member 652e-1 is, and thus, there is a smaller possibility that the absorption member 652e-1 does not have such a characteristic that the absorption of the energy beam EL is equal to or higher than the predetermined absorptance. Therefore, the observation window 65e is allowed to properly attenuate the energy beam EL by using the absorption members 652e-1 and 652e-2.

The length of the path of the energy beam EL in the absorption member 652e-1 depends on a size (typically, a thickness) D1e of the absorption member 652e-1 along a propagating direction of the energy beam EL in the absorption member 652e-1. The length of the path of the energy beam EL in the absorption member 652e-2 depends on a size (typically, a thickness) D2e of the absorption member 652e-2 along a propagating direction of the energy beam EL in the absorption member 652e-2. Thus, the size D1e may be set to a size that is different from the size D2e. Specifically, as illustrated in FIG. 11, the size D1e may be set to be longer than the size D2e.

In the fifth embodiment as described above, the energy beam EL from the workpiece W enters the absorption member 652e-1. In this case, the absorption member 652e-1 absorbs at least a partial light component of the energy beam EL (specifically, at least a partial light component determined based on the absorptance of the absorption member 652e-1). On the other hand, a residual light component of the energy beam EL that is not absorbed by the absorption member 652e-1 passes through the absorption member 652e-1. As a result, the energy beam EL that already passes through the absorption member 652e-1 enters the absorption member 652e-2. In this case, the absorption member 652e-2 also absorbs at least a partial light component of the energy beam EL2 (specifically, at least a partial light component determined based on the absorptance of the absorption member 652e-2) that enters the absorption member 652e-2, as with the absorption member 652e-1. On the other hand, a residual light component of the energy beam EL, which enters the absorption member 652e-2, that is not absorbed by the absorption member 652e-2 passes through the absorption member 652e-2. As a result, the intensity of the energy beam EL that is discharged to the external space 64OUT through the observation window 65e is reduced to be a value that is obtained by multiplying the intensity of the energy beam EL that enters the observation window 65e by the reduction ratio based on the absorptance of the absorption member 652e-1 and the reduction ratio based on the absorptance of the absorption member 652e-2. Thus, a characteristic (for example, the absorptance, and the size and the absorption coefficient that determine the absorptance) of each of the absorption members 652e-1 and 652e-2 is set to a proper value that satisfies such a requirement that the intensity of the energy beam EL that is discharged to the external space 64OUT is lower than the allowable amount.

The above described processing system SYSe in the fifth embodiment can properly perform the additive processing on the workpiece W. Furthermore, the observer that is in the external space 64OUT is allowed to properly and safely observe the condition of the chamber space 63IN through at least a part of the observation window 65e. This is because at least a part of the observation window 65e is transparent to the light in the observation wavelength band and the observation window 65e attenuates the energy beam EL.

Furthermore, in the fifth embodiment, the observation window 65e may not be provided with the reflection member 651 the expense cost is relatively high. Even in this case, since the absorption coefficient of the absorption member 652e-1 that is relatively closer to the chamber space 63IN is relatively small, there is a low possibility that the absorption member 652e-1 is molten by the heat generation due to the absorption of the energy beam EL. Namely, the observation window 65e is allowed to reduce (alternatively, eliminate) the possibility of the melting of the absorption members 652e-1 and 652e-2 and reduce the intensity of the energy beam EL. Moreover, since the length of the path of the energy beam EL in the absorption member 652e-1 that is relatively closer to the chamber space 63IN is relatively long, the absorptance of the energy beam EL by the absorption member 652e-1 the absorption coefficient of which is relatively low is hardly so low that the efficiency of reducing the intensity of the energy beam EL deteriorates considerably. Therefore, the observation window 65e is allowed to reduce the intensity of the energy beam EL relatively efficiently, without causing a large decrease of the efficiency of reducing the intensity of the energy beam EL.

Note that the absorption coefficient of the absorption member 652e-1 to the energy beam EL may be same as the absorption coefficient of the absorption member 652e-2 to the energy beam EL. The length of the path of the energy beam EL in the absorption member 652e-1 may be set to a length that is same as the length of the path of the energy beam EL in the absorption member 652e-2. Even in this case, the fact remains that the observer that is in the external space 64OUT is allowed to properly observe the condition of the chamber space 63IN through at least a part of the observation window 65e. However, in this case, the characteristics of the absorption members 652e-1 and 652e-2 may be set to proper values that realize a state where there is a low (alternatively, no) possibility that the absorption members 652e-1 and 652e-2 are molten

### (6) Processing System SYSf in sixth Embodiment

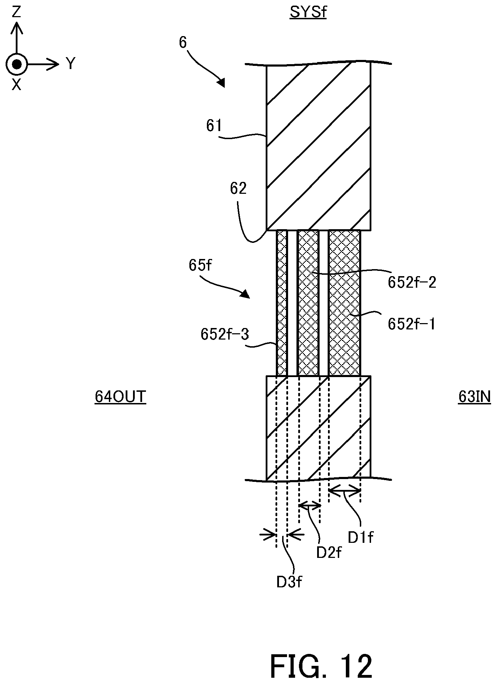

Next, the processing system SYS in a sixth embodiment (in the below description, the processing system SYS in the sixth embodiment is referred to as a "processing system SYSf") will be described. The processing system SYSf in the sixth embodiment is different from the above described processing system SYSe in the fifth embodiment in that it is provided with an observation window 65f instead of the observation window 65e. Another feature of the processing system SYSf may be same as another feature of the processing system SYSe. Therefore, in the below described description, with reference to FIG.12, the observation window 65f in the sixth embodiment will be described. FIG. 12 is a cross-sectional view that illustrates one example of a structure of the observation window 65f in the sixth embodiment.

As illustrated in FIG. 12, the observation window 65f in the sixth embodiment is different from the above described observation window 65e in the fifth embodiment that is provided with the two absorption members 652e-1 and 652e-2 (namely, may not be provided with three or more absorption members 652e) in that it is provided with three or more absorption members 652f. In an example illustrated in FIG. 12, the observation window 65f is provided with three absorption members 652f-1 to 652f-3. In the below described description, an example in which the observation window 65f is provided with the three absorption members 652f-1 to 652f-3, for convenience of the description. Another feature of the observation window 65f may be same as another feature of the observation window 65f.

Each of the absorption members 652f-1 to 652f-3 may have a structure and a characteristic that are same as those of the absorption member 652. Therefore, each of the absorption members 652f-1 to 652f-3 reduces the intensity of the energy beam EL by absorbing the energy beam, as with the absorption member 652. Furthermore, the light in the observation wavelength band is allowed to propagate from the chamber space 63IN to the external space 64OUT and from the external space 64OUT to the chamber space 63IN through at least a part of each of the absorption members 652f-1 to 652f-3.

Especially in the sixth embodiment, the absorption coefficients of the plurality of absorption members 652f to the energy beam EL are set to be different from one another. Specifically, the absorption coefficient of the absorption member 652f may be set to be smaller as the disposing position of the absorption member 652f is closer to the chamber space 63IN. Namely, the absorption coefficient of the absorption member 652f is set so that it is harder for the absorption member 652f to absorb the energy beam EL as it is disposed at a position that is closer to the chamber space 63IN. In the example illustrated in FIG. 12, the absorption coefficients of the absorption members 652f-1 to 652f-3 are set to satisfy such a relationship that the absorption coefficient of the absorption member 652f-1 that is disposed at a position closest to the chamber space 63IN < the absorption coefficient of the absorption member 652f-2 that is disposed at a position second closest to the chamber space 63IN < the absorption coefficient of the absorption member 652f-3 that is disposed at a position farthest from the chamber space 63IN. As a result, even in the six embodiment, the observation window 65f is allowed to reduce (alternatively, eliminate) the possibility of the melting of each of the absorption members 652f-1 to 652f-3 and reduce the intensity of the energy beam EL, as with the fifth embodiment. Namely, the observation window 65f is allowed to reduce (alternatively, eliminate) the possibility of the melting of each of the absorption members 652f-1 to 652f-3 and reduce the intensity of the energy beam EL, even when the observation window 65f is not provided with the reflection member 651 the expense const is relatively high.

Furthermore, in the sixth embodiment, the length of the path of the energy beam EL in the absorption member 652f-1, the length of the path of the energy beam EL in the absorption member 652f-2 and the length of the path of the energy beam EL in the absorption member 652f-3 are set to be lengths that are different from one another. Specifically, the length of the path of the energy beam EL in the absorption member 652f is set to be longer as the disposing position of the absorption member 652f is closer to the chamber space 63IN. In the example illustrated in FIG. 12, the length of the path of the energy beam EL in each of the absorption members 652f-1 to 652f-3 is set to satisfy such a relationship that the length of the path of the energy beam EL in the absorption member 652f-1 that is disposed at a position closest to the chamber space 63IN > the length of the path of the energy beam EL in the absorption member 652f-2 that is disposed at a position second closest to the chamber space 63IN > the length of the path of the energy beam EL in the absorption member 652f-3 that is disposed at a position farthest from the chamber space 63IN. As a result, even in the six embodiment, there is a smaller possibility that the absorption member 652f-1 to 652f-3 do not have such a characteristic that the absorption of the energy beam EL is equal to or higher than the predetermined absorptance, as with the fifth embodiment. Therefore, Thus, the observation window 65f is allowed to properly attenuate the energy beam EL by using the absorption members 652f-1 to 652f-3.

As described in the fifth embodiment, the length of the path of the energy beam EL in the absorption member 652f depends on a size Df of the absorption member 652f along a propagating direction of the energy beam EL in the absorption member 652f. Thus, a size D1f of the absorption member 652f-1 along a propagating direction of the energy beam EL in the absorption member 652f-1, a size D2f of the absorption member 652f-2 along a propagating direction of the energy beam EL in the absorption member 652f-2 and a size D3f of the absorption member 652f-3 along a propagating direction of the energy beam EL in the absorption member 652f-3 may be set to sizes that are different from one another. Specifically, as illustrated in FIG. 12, the size D1f may be set to be longer than the size D2f and the size D2f may be set to be longer than the size D3f.

In the sixth embodiment as described above, the energy beam EL from the workpiece W enters the absorption member 652f-1. In this case, the absorption member 652f-1 absorbs at least a partial light component of the energy beam EL (specifically, at least a partial light component determined based on the absorptance of the absorption member 652f-1). On the other hand, a residual light component of the energy beam EL that is not absorbed by the absorption member 652f-1 passes through the absorption member 652f-1. As a result, the energy beam EL that already passes through the absorption member 652f-1 enters the absorption member 652f-2. In this case, the absorption member 652f-2 also absorbs at least a partial light component of the energy beam EL2 (specifically, at least a partial light component determined based on the absorptance of the absorption member 652f-2) that enters the absorption member 652f-2, as with the absorption member 652f-1. On the other hand, a residual light component of the energy beam EL, which enters the absorption member 652f-2, that is not absorbed by the absorption member 652f-2 passes through the absorption member 652f-2. As a result, the energy beam EL that already passes through the absorption member 652f-2 enters the absorption member 652f-3. In this case, the absorption member 652f-3 also absorbs at least a partial light component of the energy beam EL2 (specifically, at least a partial light component determined based on the absorptance of the absorption member 652f-3) that enters the absorption member 652f-3, as with the absorption member 652f-1. On the other hand, a residual light component of the energy beam EL, which enters the absorption member 652f-3, that is not absorbed by the absorption member 652f-3 passes through the absorption member 652f-3. As a result, the intensity of the energy beam EL that is discharged to the external space 64OUT through the observation window 65f is reduced to be a value that is obtained by multiplying the intensity of the energy beam EL that enters the observation window 65f by the reduction ratio based on the absorptance of the absorption member 652f-1, the reduction ratio based on the absorptance of the absorption member 652f-2 and the reduction ratio based on the absorptance of the absorption member 652f-3. Thus, a characteristic (for example, the absorptance, and the size and the absorption coefficient that determine the absorptance) of each of the absorption members 652f-1 to 652f-2 is set to a proper value that satisfies such a requirement that the intensity of the energy beam EL that is discharged to the external space 64OUT is lower than the allowable amount.

According to the above described processing system SYSf in the sixth embodiment, an effect that is same as the effect achievable by the processing system SYSe in the fifth embodiment is achievable. For example, the observation window 65f is allowed to reduce (alternatively, eliminate) the possibility of the melting of the three or more absorption members 652f and reduce the intensity of the energy beam EL. Furthermore, the observation window 65f is allowed to reduce the intensity of the energy beam EL relatively efficiently, without causing a large decrease of the efficiency of reducing the intensity of the energy beam EL.

Note that the absorption coefficients of at least two of the plurality of absorption members 652f may be same as each other. The lengths of the paths of the energy beam EL in at least two of the plurality of absorption members 652f may be same as each other. Even in this case, the fact remains that the observer that is in the external space 64OUT is allowed to properly observe the condition of the chamber space 63IN through at least a part of the observation window 65f. However, in this case, the characteristics of the plurality of absorption members 652f may be set to proper values that realize a state where there is a low (alternatively, no) possibility that the plurality of absorption members 652f are molten

### (7) Processing System SYSg in seventh Embodiment

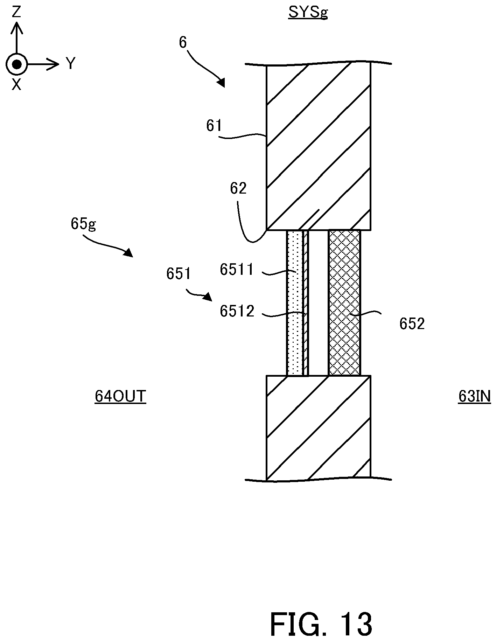

Next, the processing system SYS in a seventh embodiment (in the below description, the processing system SYS in the seventh embodiment is referred to as a "processing system SYSg") will be described. The processing system SYSg in the seventh embodiment is different from the above described processing system SYSa in the first embodiment in that it is provided with an observation window 65g instead of the observation window 65. Another feature of the processing system SYSg may be same as another feature of the processing system SYSa. Therefore, in the below described description, with reference to FIG.13, the observation window 65g in the seventh embodiment will be described. FIG. 13 is a cross-sectional view that illustrates one example of a structure of the observation window 65g in the seventh embodiment.

As illustrated in FIG. 13, the observation window 65g in the seventh embodiment is different from the above described observation window 65 in the first embodiment in that the disposing positions of the reflection member 651 and the absorption member 652 are changed. The observation window 65g is different from the above described observation window 65 in the first embodiment in that a positional relationship among the reflection member 651, the absorption member 652, the chamber space 63IN and the external space 64OUT is changed. Another feature of the observation window 65g may be same as another feature of the observation window 65.

Specifically, the absorption member 652 is disposed at a position that is closer to the chamber space 63IN than the reflection member 651. The absorption member 652 may face the chamber space 63IN. The reflection member 651 is disposed at a position that is farther from the chamber space 63IN than the absorption member 652. The absorption member 652 is disposed between the reflection member 651 and the chamber space 63IN. The absorption member 652 is disposed at a position that is farther from the external space 64OUT than the reflection member 651. The reflection member 651 is disposed at a position that is closer to the chamber space 63IN than the absorption member 652. The reflection member 651 may face the external space 64OUT. The reflection member 651 is disposed between the absorption member 652 and the external space 64OUT. Since the reflection member 651, the absorption member 652, the chamber space 63IN and the external space 64OUT have the above described positional relationship, the energy beam EL that enters the observation window 65g from the chamber space 63IN firstly enters the absorption member 652. Then, the energy beam EL that already passes through the absorption member 652 (namely, the energy beam EL that is not reflected by the absorption member 652) enters the reflection member 651. Then, the energy beam EL that already passes through the reflection member 651 is discharged to the external space 64OUT.

According to the above described processing system SYSg in the seventh embodiment, an effect that is same as the effect achievable by the processing system SYSa in the first embodiment is achievable. However, in the seventh embodiment, the energy beam EL from the workpiece W enters the absorption member 652 without through the reflection member 651. Thus, the characteristic of the absorption member 652 be set to a proper value that realizes a state where the absorption member 652 is not molten even when the energy beam EL enters the absorption member 652 without through the reflection member 651. For example, the absorption member 652 may have the characteristic that is same as that of the absorption member 652e-1 (namely, the absorption member 652e that is the closest to the chamber space 63IN) in the fifth embodiment illustrated in FIG. 11. For example, the absorption member 652 may have the characteristic that is same as that of the absorption member 652f-1 (namely, the absorption member 652f that is the closest to the chamber space 63IN) in the sixth embodiment illustrated in FIG. 12. As a result, even in the seventh embodiment in which the energy beam EL from the workpiece W enters the absorption member 652 without through the reflection member 651, the observation window 65g is allowed to reduce (alternatively, eliminate) the possibility of the melting of the absorption member 652 and reduce the intensity of the energy beam EL.

### (8) Processing System SYSh in eighth Embodiment

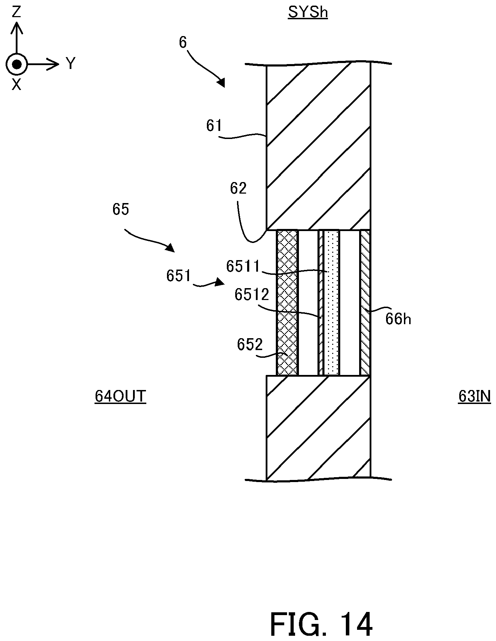

Next, with referring to FIG. 14, the processing system SYS in a eighth embodiment (in the below description, the processing system SYS in the eighth embodiment is referred to as a "processing system SYSh") will be described. FIG. 14 is a cross-sectional view that illustrates a structure near the aperture 62 of the enclosure 6 of the processing system SYSh in the eighth embodiment.

As illustrated in FIG. 14, the processing system SYSh in the eighth embodiment is different from the above described processing system SYSa in the first embodiment in that it is provided with a cover member 66h. Another feature of the processing system SYSh may be same as another feature of the processing system SYSa.

The cover member 66h is disposed between the observation window 65 and the chamber space 63IN. The cover member 66h is disposed at a size, which is opposite to the absorption member 652, of the reflection member 651. The reflection member 651 is disposed between the cover member 66h and the absorption member 652. In an example illustrated in FIG. 14, the cover member 66h is disposed in the aperture 62. However, the cover member 66h may be disposed at an outside of the aperture 62. Namely, the cover member 66h may be disposed in the chamber space 63IN. When the cover member 66h is disposed in this manner, the energy beam EL from the chamber space 63IN enters the reflection member 651 through the cover member 66h. Namely, the reflection member 651 reduced the intensity of the energy beam EL that enters the reflection member 651 through the cover member 66h.

Note that the cover member 66h may attenuate or may not attenuate the intensity of the energy beam EL that enters the cover member 66h. Thus, a transmittance of the energy beam EL to the cover member 66h may be any value. However, since each of the reflection member 651 and the absorption member 652 reduces the intensity of the energy beam EL as described above, the transmittance of the energy beam EL to the cover member 66h is typically higher than the transmittance of the energy beam EL to each of the reflection member 651 and the absorption member 652. However, the transmittance of the energy beam EL to the cover member 66h may be lower than or same as the transmittance of the energy beam EL to at least one of the reflection member 651 and the absorption member 652.

The observation window 65 is separated from the chamber space 63IN by the cover member 66h. As a result, the build material M supplied from the material nozzle 212 to the chamber space 63IN does not leak, through the aperture 62, from the chamber space 63IN to a space in which the observation window 65 is located (namely, a space that is located at the external space 64OUT side than the cover member 66h). Furthermore, the build material M supplied from the material nozzle 212 to the chamber space 63IN does not contact with the observation window 65 (especially, a member of the observation window 65 that is located at a position closest to the chamber member 63IN, and the reflection member 651 in the example illustrated in FIG. 14). Specifically, the build material M supplied from the material nozzle 212 to the chamber space 63IN does not adhere to the observation window 65. The build material M supplied from the material nozzle 212 to the chamber space 63IN does not collide with the observation window 65. Namely, a contact of the build materials M to the observation window 65 in this embodiment may includes both of an adherence of the build materials M to the observation window 65 and a collision of the build materials M to the observation window 65. In this case, the cover member 66h may serve as an apparatus that prevents a leakage of the build materials M. The cover member 66h may serve as an apparatus that prevents the contact of the build materials M to the observation window 65.

There is a possibility that a substance that is generated from the build surface CS due to the irradiation of the energy beam EL exists in the chamber space 63IN, in addition to or instead of the build materials M supplied from the material nozzle 212. A fume including at least one of a fine particle of the molten build materials M and fine particle of the material of the molten workpiece W is one example of this substance. In this case, the substance such as the fume does not leak, through the aperture 62, from the chamber space 63IN to the space in which the observation window 65 is located (namely, the space that is located at the external space 64OUT side than the cover member 66h). Furthermore, the substance such as the fume does not adhere to the observation window 65 (especially, the member of the observation window 65 that is located at a position closest to the chamber member 63IN, and the reflection member 651 in the example illustrated in FIG. 14). In this case, the cover member 66h may serve as an apparatus that prevents a leakage of the substance such as the fume. The cover member 66h may serve as an apparatus that prevents the adherence of the substance such as the fume to the observation window 65.

At least a part of the cover member 66h is transparent to the light in the observation wavelength band. Namely, the light in the observation wavelength band is allowed to pass through the cover member 66h. Thus, the light in the observation wavelength band is allowed to propagate from the chamber space 63IN to the external space 64OUT through the cover member 66h. In the same manner, the light in the observation wavelength band is allowed to propagate from the external space 64OUT to the chamber space 63IN through the cover member 66h. As a result, the observer that is in the external space 64OUT is allowed to observe the condition of the chamber space 63IN through at least a part of the cover member 66h. The observer that is in the external space 64OUT is allowed to observe the condition of the chamber space 63IN through the aperture 62.

According to the above described processing system SYSh in the eighth embodiment, an effect that is same as the effect achievable by the processing system SYSa in the first embodiment is achievable. Furthermore, in the eighth embodiment, the cover member 66h prevents the substance including at least one of the build materials and the fume from adhering to the observation window 65. There is a small possibility that the efficiency of reducing the intensity of the energy beam EL by the observation window 65 deteriorates due to the adherence of the substance to the observation window 65. Furthermore, since the substance does not adhere to the observation window 65, it is possible to achieve such an effect that the observation window 65 is cleaned easily. Especially, when a top surface of the observation window 65 (especially, a surface facing the chamber space 63IN, and a top surface of the reflection member 651 in the example illustrated in FIG. 14) is coated by a coating processing, it is possible to achieve such an effect that the observation window 65 is cleaned without damaging (for example, scratching by the substance) the observation window 65.

Note that the cover member 66h may serve as an apparatus that protects the observation window 65. For example, the cover member 66h protects the observation window 65 to prevent an object existing in the chamber space 63IN from contacting with (in other words, colliding with) the observation window 65. For example, the cover member 66h protects the observation window 65 to prevent the object existing in the chamber space 63IN from destroying the observation window 65. The object existing in the chamber space 63IN may be an object that moves in the chamber space 63IN. At least one of the processing head 21 and the stage 31 is one example of the object that moves in the chamber space 63IN.

The processing systems in the second embodiment to the eighth embodiment may also be provided with the cover member 66h.

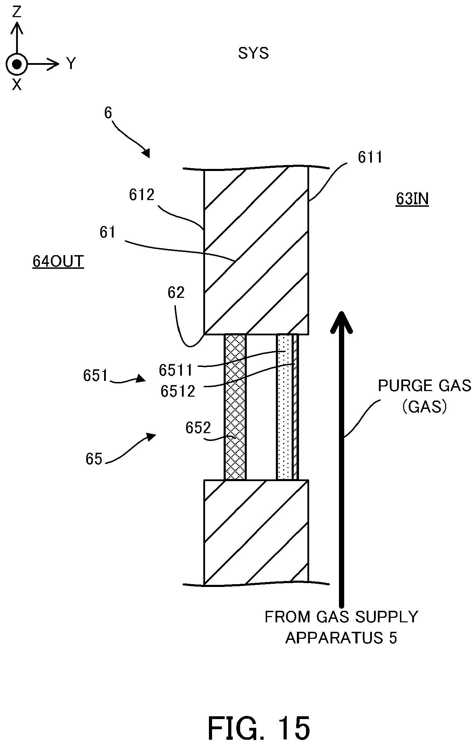

In the above described description, the cover member 66h serves as the apparatus that prevents the adherence of the substance such as the build materials / the fume to the observation window 65. However, the processing system SYSh (alternatively, the processing systems SYS in the above described first embodiment to the eighth embodiment) may be provided with, as the apparatus that prevents the adherence of the substance such as the build materials / the fume to the observation window 65 (namely, an adherence prevention apparatus), an apparatus that is different from the cover member 66h. For example, the gas supply apparatus 5 (alternatively, any gas supply apparatus that is different from the gas supply apparatus 5) may be used as the adherence prevention apparatus. Specifically, as illustrated in FIG. 15 that is a cross-sectional view that illustrates an aspect of preventing the adherence of the substance to the observation window 65 by using the gas supply apparatus 5, the purge gas supplied from the gas supply apparatus 5 to the internal space 63IN (alternatively, gas supplied from the gas supply apparatus to the internal space 63IN, the same applies to the below described description) may prevents the adherence of the substance to the observation window 65. Namely, the purge gas flowing in the internal space 63IN may prevents the adherence of the substance to the observation window 65. In this case, the purge gas supplied from the gas supply apparatus 5 may be used as what we call air curtain. The substance adhering to the observation window 65 may be blown by the purge gas supplied from the gas supply apparatus 5.

### (9) Processing System SYSi in ninth Embodiment

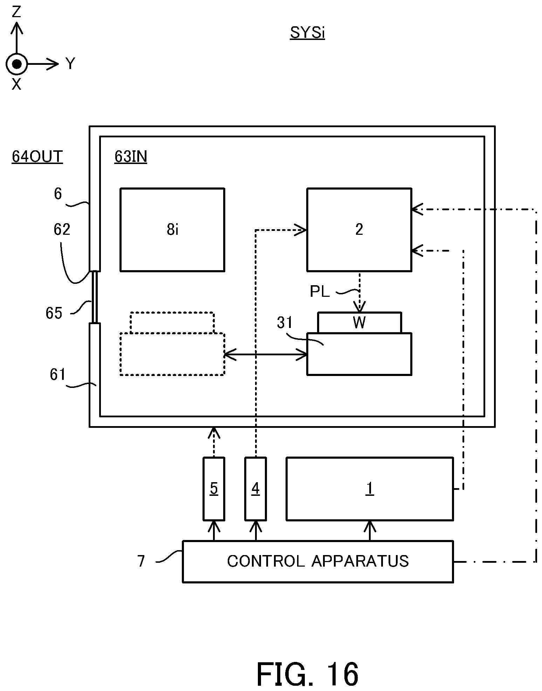

Next, with referring to FIG. 16, the processing system SYS in a ninth embodiment (in the below description, the processing system SYS in the ninth embodiment is referred to as a "processing system SYSi") will be described. FIG. 16 is a cross-sectional view that illustrates a structure of the processing system SYSi in the ninth embodiment.

As illustrated in FIG. 16, the processing system SYSi in the ninth embodiment is different from the above described processing system SYSa in the first embodiment (alternatively, at least one of the processing system SYSb in the second embodiment to the processing system SYSh in the eighth embodiment) in that it is further provided with a measurement apparatus 8i. Another feature of the processing system SYSi may be same as another feature of the processing system SYSa (alternatively, at least one of the processing system SYSb in the second embodiment to the processing system SYSh in the eighth embodiment).

The measurement apparatus 8i is housed in the chamber space 63IN, however, may be disposed at another position (for example, the external space 64OUT). The measurement apparatus 8i is configured to measure a measurement target object under the control of the control apparatus 7. The measurement target object includes the workpiece W (moreover, the three-dimensional structural object ST under generation, the same applies to the below described description), for example. For example, the measurement apparatus 8i may be an apparatus that is configured to measure a condition of the workpiece W, for example. The condition of the workpiece W may include a position of the workpiece W. The position of the workpiece W may include a position of a surface of the workpiece W. The position of the surface of the workpiece W may include a position of each segmentalized surface part of the surface of the workpiece W in at least one of the X axis direction, the Y axis direction and the Z axis direction. The condition of the workpiece W may include a shape (for example, a three-dimensional shape) of the workpiece W. The shape of the workpiece W may include a shape of the surface of the workpiece W. The shape of the surface of the workpiece W may include a direction of each segmentalized surface part of the workpiece W (for example, a direction of a normal line of each surface part, and this is equivalent to an inclination amount of each surface part with respect to at least one of the X axis direction, the Y axis direction and the Z axis direction), in addition to the above described position of the surface of the workpiece W. The condition of the workpiece W may include a size (for example, a size in at least one of the X axis direction, the Y axis direction and the Z axis direction) of the workpiece W.

In the ninth embodiment, the stage 31 may be movable between a processing position at which the additive processing is performed by the processing apparatus 2 and a measurement position at which the measurement is performed by the measurement apparatus 8i. The stage 31 may move between the processing position and the measurement position while supporting the workpiece W. When the stage 31 is located at the processing position, the processing apparatus 2 performs the additive processing on the workpiece W supported by the stage 31. When the stage 31 is located at the measurement position, the measurement apparatus 8i measures the workpiece W supported by the stage 31. However, the measurement apparatus 8i may be configured to measure the workpiece W in a state where the stage 31 is located at the processing position. In this case, it can be said that the processing position overlaps with the measurement position at least partially.

A measured result by the measurement apparatus 8i is outputted to the control apparatus 7. The control apparatus 7 may control the operation of the processing system SYSi on the basis of the measured result by the measurement apparatus 8i.

According to the above described processing system SYSi in the nin embodiment, an effect that is same as the effect achievable by the processing system SYSa in the first embodiment is achievable. Furthermore, the processing system SYSi can properly perform the additive processing on the workpiece W on the basis of the measured result by the measurement apparatus 8i.

### (10) Other Modified Example

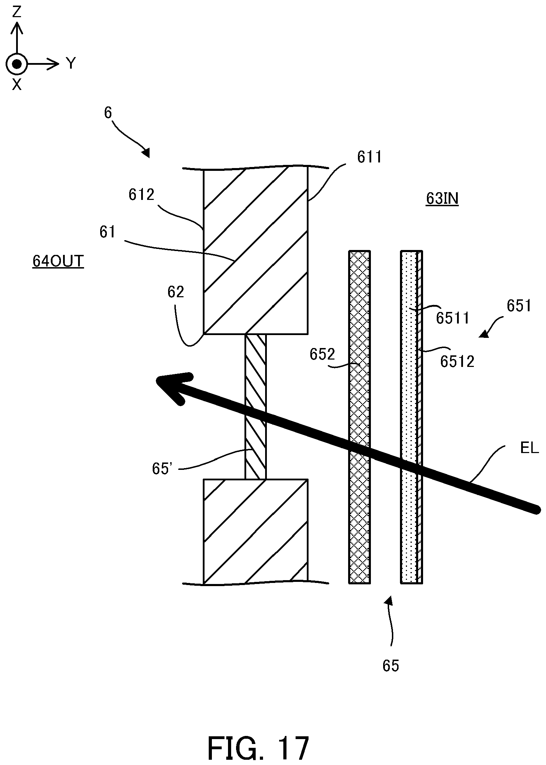

In the above described description, the observation window 65 that is allowed to attenuate the energy beam EL is disposed in the aperture 62. Namely, the observation window 65 disposed in the aperture 62 attenuates the energy beam El that reaches the aperture 62. However, the observation window 65 that is allowed to attenuate the energy beam EL may not be disposed in the aperture 62. For example, as illustrated in FIG. 17, the observation window 65 may be disposed on an optical path of the energy beam in front of the aperture 62. In this case, the observation window 65 attenuates the energy beam EL that does not reach the aperture 62 yet and energy beam EL that is attenuated by the observation window 65 propagates to the external space 64OUT through the aperture 62. However, when the observation window 65 is not disposed in the aperture 62, another observation window 65' that is used as a part of the wall member 61 that separates the chamber space 63IN from the external space 64OUT and that is transparent to the light in the observation wavelength band may be disposed in the aperture 62. Another observation window 65' may not be configured to attenuate the energy beam EL, in contrast to the observation window 65.

In the above described description, the processing apparatus 2 melts the build materials M by irradiating the build materials M with the processing beam PL. However, the processing apparatus 2 may melt the build materials M by irradiating the build materials M with any energy beam. In this case, the processing apparatus 2 may be provided with a beam irradiation apparatus that is configured to emit any energy beam in addition to or instead of the irradiation optical system 211. Any energy beam includes, but is not limited to, a charged particle beam such as an electron beam and an ion beam or electromagnetic wave.

In the above described description, the processing system SYS is configured to form the three-dimensional structural object ST by the Laser Metal Deposition. However, the processing system SYS may form the three-dimensional structural object ST from the build materials M by another method for forming the three-dimensional structural object ST by irradiating the build materials M with the processing beam PL (alternatively, any energy beam). A Powder Bed Fusion such as a Selective Laser Sintering (SLS), a Binder Jetting or a Laser Metal Fusion (LMF) is one example of another method, for example. Alternatively, the processing system SYS may form the three-dimensional structural object ST by any method for the additive processing that is different from the method for forming the three-dimensional structural object ST by irradiating the build materials M with the processing beam PL (alternatively, any energy beam).

Alternatively, the processing system SYS may perform a removal processing that removes at least a part of an object by irradiating the object such as the workpiece W with the processing beam PL (alternatively, any energy beam) in addition to or instead of the additive processing. Alternatively, the processing system SYS may perform a marking processing that forms a mark (for example, a character, a number or a graphic) on at least a part of an object by irradiating the object such as the workpiece W with the processing beam PL (alternatively, any energy beam) in addition to or instead of at least one of the additive processing and the removal processing. Even in these cases, the above described effect is achievable.

In the above described description, the processing system SYS forms the three-dimensional structural object ST by supplying the build materials M from the material nozzle 212 to the irradiation area EA that is irradiated with the processing beam PL by the irradiation optical system 211. However, the processing system SYS may form the three-dimensional structural object ST by supplying the build materials M from the material nozzle 212 without emitting the processing beam PL from the irradiation optical system 211. For example, the processing system SYS may form the three-dimensional structural object ST by spraying the build materials M from the material nozzle 212 to the build surface MS to thereby melt the build materials M on the build surface MS and then solidifying the molten build materials M. For example, the processing system SYS may form the three-dimensional structural object ST by spraying gas including the build materials M at an ultrafast speed from the material nozzle 212 to the build surface MS to thereby melt the build materials M on the build surface MS and then solidifying the molten build materials M. For example, the processing system SYS may form the three-dimensional structural object ST by spraying the heated build materials M from the material nozzle 212 to the build surface MS to thereby melt the build materials M on the build surface MS and then solidifying the molten build materials M. When the three-dimensional structural object ST is formed without emitting the processing beam PL from the irradiation optical system 211, the processing system SYS may not be provided with the irradiation optical system 211.

At least a part of the features of each embodiment described above may be properly combined with at least another a part of the features of each embodiment described above. A part of the features of each embodiment described above may not be used. Moreover, the disclosures of all publications and United States patents that are cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification. A processing system and a processing method, which involve such changes, are also intended to be within the technical scope of the present invention.

### Description of Reference Codes

- 1: material supply apparatus
- 2: processing apparatus
- 21: processing head
- 211: irradiation optical system
- 212: material nozzle
- 6: housing
- 61: wall member
- 62: aperture
- 63IN: chamber space
- 64OUT: external space
- 65: observation window
- 651: reflection member
- 652: absorption member
- SYS: processing system
- W: workpiece
- M: build material
- SL: structural layer
- CS: build surface
- EA: irradiation area
- MA: supply area
- MP: melt pool

## Claims

1. A processing system comprising:
a housing in which an object is housed and that has a formed part through which light is allowed to pass;
an irradiation apparatus that emits a processing beam for processing the object;
a first member which an energy beam from the irradiation apparatus that propagates toward an outside of the housing through the part enters; and
a second member which the energy beam through the first member enters,
the first member reducing an intensity of the energy beam that enters the first member,
the second member reducing an intensity of the energy beam that enters the second member from the first member.

2. The processing system according to claim 1, wherein
the first member reducing an intensity of the energy beam that passes through the first member to propagate toward the second member so that it is lower than an intensity of the energy beam that enters the first member,
the second member reducing an intensity of the energy beam that passes through the second member so that it is lower than an intensity of the energy beam that enters the second member.

3. A processing system comprising:
a housing in which an object is housed and that has a formed part through which light is allowed to pass;
an irradiation apparatus that emits a processing beam for processing the object;
a first member which an energy beam from the irradiation apparatus that propagates toward an outside of the housing through the part enters; and
a second member which the energy beam through the first member enters,
an intensity of the energy beam that passes through the first member to propagate toward the second member being smaller than an intensity of the energy beam that enters the first member,
an intensity of the energy beam that passes through the second member being smaller than an intensity of the energy beam from the first member that enters the second member.

4. The processing system according to any one of claims 1 to 3, wherein
the part that is formed at the housing and through which the light is allowed to pass is an aperture that is formed at the housing.

5. The processing system according to claim 4, wherein
the first member and the second member are disposed in the aperture that is formed at the housing.

6. The processing system according to any one of claims 1 to 5, wherein
the housing includes a wall member that separates an inside of the housing from the outside of the housing.

7. The processing system according to claim 6, wherein
the first member and the second member are used as at least a part of the wall member.

8. The processing system according to claim 6 or 7, wherein
an aperture is formed at the wall member,
the first member and the second member are disposed in the aperture that is formed at the housing.

9. The processing system according to any one of claims 1 to 8, wherein
the energy beam that enters the first member includes a reflection component, which is caused by the object, of the processing beam with which the object is irradiated.

10. The processing system according to any one of claims 1 to 9, wherein
at least a part of the first member is transparent to light in at least partial wavelength band of a wavelength band of visible light.

11. The processing system according to any one of claims 1 to 10, wherein
a transmittance of light in at least partial wavelength band of a wavelength band of visible light to the first member is higher than a transmittance of the first member in a wavelength band of the energy beam.

12. The processing system according to any one of claims 1 to 10, wherein
at least a part of the second member is transparent to light in at least partial wavelength band of a wavelength band of visible light.

13. The processing system according to any one of claims 1 to 12, wherein
a transmittance of light in at least partial wavelength band of a wavelength band of visible light to the second member is higher than a transmittance of the second member in a wavelength band of the energy beam.

14. The processing system according to any one of claims 10 to 13, wherein
a wavelength of the energy beam does not overlap with the at least partial wavelength band.

15. The processing system according to any one of claims 1 to 14, wherein
light that propagates toward the outside of the housing through the part and that is in at least partial wavelength band of a wavelength band of visible light is allowed to pass through at least a part of the first member.

16. The processing system according to any one of claims 1 to 15, wherein
light that propagates toward the outside of the housing through the part and that is in at least partial wavelength band of a wavelength band of visible light is allowed to pass through at least a part of the second member.

17. The processing system according to any one of claims 1 to 16, wherein
information relating to an inside of the housing is obtainable at the outside of the housing through the part,
the information is obtainable through the first member and the second member.

18. The processing system according to any one of claims 1 to 17, wherein
an inside of the housing is observable from the outside of the housing through the part,
the inside of the housing is observable from the outside of the housing through the first member and the second member.

19. The processing system according to any one of claims 1 to 18, wherein
an energy amount of the energy beam per unit time that is discharged toward the outside of the housing through the part becomes smaller than a predetermined amount by reducing an intensity of the energy beam by using the first member and the second member.

20. The processing system according to any one of claims 1 to 19, wherein
an energy amount of the energy beam per unit time that is discharged toward the outside of the housing through the part becomes smaller than a predetermined amount that satisfies a safety standard of Class 1 defined by IEC (International Electrotechnical Commission) 60825-1 by reducing an intensity of the energy beam by using the first member and the second member.

21. The processing system according to any one of claims 1 to 20, wherein
the first member reflects at least a part of the energy beam that enters the first member.

22. The processing system according to claim 21, wherein
an intensity of a component, which is reflected by the first member, of the energy beam that enters the first member is higher than an intensity of a component that passes through the first member.

23. The processing system according to any one of claims 1 to 22, wherein
the first member includes a reflection film.

24. The processing system according to any one of claims 1 to 23, wherein
the first member includes a base member and a reflection film that is formed on the base member.

25. The processing system according to claim 24, wherein
the reflection film is formed on a surface of the base member that faces toward the second member side.

26. The processing system according to claim 24 or 25, wherein
the reflection film is formed on a surface of the base member that faces toward a side that is opposite to the second member side.

27. The processing system according to any one of claims 24 to 26, wherein
the base member includes inorganic material.

28. The processing system according to any one of claims 1 to 27, wherein
the second member absorbs at least a part of the energy beam from the first member.

29. The processing system according to claim 28, wherein
a heat resistance temperature of the first member is higher than a heat resistance temperature of the second member.

30. The processing system according to claim 28 or 29, wherein
the second member includes organic material.

31. The processing system according to any one of claims 1 to 30, wherein
the second member reflects at least a part of the energy beam from the first member.

32. The processing system according to any one of claims 1 to 31, wherein
the first member absorbs at least a part of the energy beam that enters the first member.

33. The processing system according to claim 32, wherein
the second member absorbs at least a part of the energy beam from the first member.

34. The processing system according to claim 33, wherein
an absorption coefficient of the first member to the energy beam is different from an absorption coefficient of the second member to the energy beam.

35. The processing system according to claim 33 or 34, wherein
an absorption coefficient of the first member to the energy beam is smaller than an absorption coefficient of the second member to the energy beam.

36. The processing system according to any one of claims 33 to 35, wherein
a size of the first member along a propagating direction of the energy beam at a disposing position of the first member is different from a size of the second member along the propagating direction of the energy beam at a disposing position of the second member.

37. The processing system according to any one of claims 33 to 36, wherein
a size of the first member along a propagating direction of the energy beam at a disposing position of the first member is larger than a size of the second member along the propagating direction of the energy beam at a disposing position of the second member.

38. The processing system according to any one of claims 33 to 37, wherein
a length of a path of the energy beam in the first member is different from a length of a path of the energy beam in the second member.

39. The processing system according to any one of claims 33 to 38, wherein
a length of a path of the energy beam in the first member is longer than a length of a path of the energy beam in the second member.

40. The processing system according to any one of claims 33 to 39, wherein
a heat amount per unit length due to an absorption of the energy beam in the first member is equal to or smaller than a heat amount per unit length due to an absorption of the energy beam in the second member

41. The processing system according to any one of claims 1 to 40, wherein
the second member reflects at least a part of the energy beam from the first member.

42. The processing system according to any one of claims 1 to 41 comprising an internal member that is disposed at a side, which is opposite to the second member side, of the first member.

43. The processing system according to any one of claims 1 to 42 comprising an internal member,
the first member being disposed between the second member and the internal member.

44. The processing system according to claim 42 or 43, wherein
the energy beam that propagates to the outside of the housing through the part enters the first member through the internal member.

45. The processing system according to any one of claims 42 to 44, wherein
light that propagates to the outside of the housing through the part and that is in at least partial wavelength band of a wavelength band of visible light is allowed to pass through at least a part of the internal member.

46. The processing system according to any one of claims 42 to 45, wherein
at least a part of the internal member is transparent to light in at least partial wavelength band of a wavelength band of visible light.

47. The processing system according to claim 45 or 46, wherein
a wavelength of the energy beam does not overlap with the at least partial wavelength band.

48. The processing system according to any one of claims 42 to 47, wherein
a transmittance of the energy beam to the internal member is higher than transmittances of the energy beam to the first member and the second member.

49. The processing system according to any one of claims 42 to 48, wherein
the internal member prevents the first member from contacting with substance existing in an inside of the housing.

50. A processing system comprising:
a housing in which an object is housed and that has a part through which light is allowed to pass;
an irradiation apparatus that irradiates the object with a processing beam;
a member which an energy beam from the irradiation apparatus that propagates toward an outside of the housing through the part enters and that reduces an intensity of the energy beam that enters the member; and
a contact prevention apparatus that prevents the member from contacting with substance existing in an inside of the housing.

51. The processing system according to claim 50, wherein
the contact prevention apparatus prevents the member from contacting with the substance by gas.

52. The processing system according to claim 50, wherein
the contact prevention apparatus includes an internal member,
the energy beam that propagates toward the outside of the housing through the part enters the member, which reduces the intensity of the energy beam, through the internal member.

53. The processing system according to claim 52, wherein
the energy beam that propagates toward the outside of the housing through the part and that is in at least partial wavelength band of a wavelength band included in visible light is allowed to pass through at least a part of the internal member.

54. The processing system according to claim 52 or 53, wherein
at least a part of the internal member is transparent to light in at least partial wavelength band included in a wavelength band of visible light.

55. The processing system according to any one of claims 52 to 54, wherein
a transmittance of the energy beam to the internal member is higher than a transmittance of the energy beam to the member.

56. The processing system according to any one of claims 49 to 55, wherein
the substance includes at least one of a first substance that is generated by an irradiation of the energy beam to the object and a second substance that is supplied to an inside of the housing concomitantly with the irradiation of the energy beam to the object.

57. The processing system according to any one of claims 1 to 56 performing at least one of a removal processing that removes at least a part of the object, an additive processing that adds a material to the object and a marking processing that forms a mark on the object by irradiating the object with the energy beam.

58. The processing system according to any one of claims 50 to 57, wherein
the object that reflects the energy beam is a processing target object of the processing system.

59. The processing system according to any one of claims 1 to 58 further comprising a support apparatus that supports the object,
the energy beam that propagates toward the outside of the housing through the part includes a reflection component of the energy beam from the irradiation apparatus with which the at least a part of the support apparatus is irradiated.

60. A processing method of processing the object by using the processing apparatus according to any one of claims 1 to 59.

61. A processing method comprising:
irradiating an object that is housed in a housing having a formed part through which light is allowed to pass with a processing beam;
reducing an intensity of an energy beam from the irradiation apparatus that propagates toward an outside of the housing through the part by using a first member; and
reducing an intensity of the energy beam, the intensity of which is already reduced by the first member, by using the second member.

62. A processing method comprising:
irradiating an object that is housed in a housing having a formed part through which light is allowed to pass with a processing beam;
making an intensity of the energy beam that passes through the first member to propagate toward the second member be lower than an intensity of the energy beam that propagates to an outside of the housing through the part and that enters the first member from the irradiation apparatus; and
making an intensity of the energy beam that passes through the second member be lower than an intensity of the energy beam from the first member that enters the second member.

63. A processing method comprising:
irradiating an object that is housed in a housing having a formed part through which light is allowed to pass with a processing beam;
reducing an intensity of the energy beam that propagates toward an outside of the housing through the part by using a member; and
preventing the member from contacting with substance existing in an inside of the housing.
